# EUROPÄISCHE PATENTSCHRIFT

(11) **EP 1 774 193 B1**
(45) Veröffentlichungstag und Bekanntmachung des Hinweises auf die Patenterteilung: **21.03.2012**
(21) Anmeldenummer: 05760753.3
(22) Anmeldetag: 08.07.2005
(51) Int. Cl.: F16D 21/06

(54) **REIBUNGSKUPPLUNG VOM NORMAL-OFFEN-TYP**
NORMALLY OPEN TYPE FRICTION CLUTCH
EMBRAYAGE A FRICTION DU TYPE NORMALEMENT OUVERT

(30) Priorität: 30.07.2004 DE 102004037114
(43) Veröffentlichungstag der Anmeldung: 18.04.2007
(73) Patentinhaber: ZF Friedrichshafen AG, 88046 Friedrichshafen (DE)
(72) Erfinder: BINDIG, Sebastian, 97529 Sulzheim-Alitzheim (DE); PETERSEIM, Michael, 97493 Bergrheinfeld (DE); VOGT, Sebastian, 97616 Bad Neustadt (DE)
(86) Internationale Anmeldenummer: PCT/EP2005/007420
(87) Internationale Veröffentlichungsnummer: WO 2006/012972

(56) Entgegenhaltungen:
- EP-A- 1 443 233
- WO-A-2004/079218
- US-A- 3 317 013
- US-A1- 2004 118 655

## Beschreibung

### Technisches Gebiet

Die Erfindung betrifft eine Reibungskupplung, umfassend eine Gehäuseanordnung, wenigstens eine unter der Wirkung einer zugeordneten Lüftfederanordnung stehende Anpressplatte, welche mit der Gehäuseanordnung zur gemeinsamen Drehung um eine Drehachse und in Richtung der Drehachse bezüglich der Gehäuseanordnung verlagerbar gekoppelt ist, wenigstens ein Einrückersystem zur Erzeugung einer Einrückkraft, und wenigstens eine Kraftbeaufschlagungsanordnung zur Übertragung der Einrückkraft auf die Anpressplatte, um diese gegen.die Wirkung der Lüftfederanordnung in Richtung der Drehachse in Einrückrichtung zu bewegen.

### Stand der Technik

Bei Kupplungen vom NO-Typ (NORMAL-OFFEN-Typ oder NORMALERWEISE-OFFEN-Typ), wie sie heute bei Ein- und Doppelkupplungssystemen Anwendung finden, wird der Kupplungsbereich bzw. der jeweilige Kupplungsbereich nicht durch einen Kraftspeicher, etwa eine Membranfeder, in einen Einrückzustand vorgespannt, sondern muss durch Erzeugung einer Betätigungskraft, beispielsweise vermittels eines Einrückersystems, aktiv in den Einrückzustand gebracht werden. Da jedoch übliche Einrückersysteme nur einfach wirken, d. h. nur in der Einrückrichtung wirkend ausgeführt sind, muss die Rückstellkraft für das Einrückersystem, d. h. zum Öffnen der Kupplung, von einer Lüfkrafterzeugungseinrichtung, hier kurz als Lüftfederanordnung angesprochen, bereitgestellt werden, z. B. von einer von Tangentialblattfedern gebildeten Lüftfederanordnung. Die Tangentialblattfedern werden hierbei so ausgelegt, dass die Rückstellkräfte gerade noch ausreichen, die Kupplung sicher zu öffnen und im ausgekuppelten Zustand zu halten, damit die auf das Einrückersystem und die Einrücklager im eingekuppelten, d. h. eingerückten Zustand wirkenden Kräfte möglichst gering gehalten werden. Dementsprechend ist jedoch auch das Startniveau der Einrückkraft sehr oder sogar verschwindend gering, was problematisch ist, da derartige Kupplungssysteme im vorderen Bereich der Einrückstrecke (zu Beginn des Einrückens) schwer regelbar sind, weil in diesem Bereich kleine Kraftänderungen auf dem niedrigen Kraftniveau im Einrückersystem bereits zu großen Wegänderungen am Einrücklager führen.

Die US 2004/0118655 A1 offenbart eine Reibungskupplung gemäß dem Oberbegriff des Anspruchs 1.

### Darstellung der Erfindung

Demgegenüber ist es eine Aufgabe der Erfindung, eine Reibungskupplung der angesprochenen Art anzugeben, welche trotz zumindest einigermaßen guter Regelbarkeit im Anfangsbereich der Einrückstrecke so ausgelegt ist, dass die im Zuge des Einrückens und speziell im eingerückten Zustand auf das Einrückersystem und Einrücklager wirkenden Kräfte bezogen auf eine gewünschte bzw. vorgegebene maximale Momentübertragbarkeit, also eine im Kupplungsbereich wirksame maximale Reibflächenanpresskraft vergleichsweise gering sind. Ziel ist es insbesondere, dass gegenüber der maximalen Anpresskraft, genauer gegenüber der zum Einrückersystem durch die Kraftbeaufschlagungsanordnung übertragenen, am Einrückersystem wirksamen Kraftkomponente entsprechend der Anpresskraft (die je nach Untersetzung bzw. Übersetzung größer oder kleiner als die an den Reibflächen wirkende Anpresskraft sein kann) zumindest bezogen auf den eingerückten Zustand bei maximaler Momentübertragbarkeit und idealerweise auch bezogen auf schon deutlich eingerückte Zwischenzustände keine das Einrückersystem belastende bzw. stärker ausgelegte Einrückersysteme erforderlich machende Zusatzkräfte hinzukommen sollen.

Eine weitere Aufgabe der Erfindung ist es, eine Reibungskupplung der angesprochenen Art anzugeben, die so ausgelegt ist, dass die Bedeutung eines Reibbelagverschleißausgleiches für die Gewährleistung hinreichender Anpresskräfte im verschlissenen Zustand zumindest reduziert ist.

Zur Lösung wenigstens einer dieser Aufgaben stellt die Erfindung nach einem ersten Aspekt (im Folgenden auch Aspekt A genannt) bereit eine Reibungskupplun gemäß Anspruch 1.

Nicht gemäß der Erfindung stellt zur Lösung wenigstens einer der Aufgaben nach einem zweiten Aspekt (im Folgenden auch Aspekt B genannt) sowie nach einem dritten Aspekt (im Folgenden auch Aspekt C genannt) bereit eine Reibungskupplung, umfassend eine Gehäuseanordnung eine Gehäuseanordnung, wenigstens eine unter der Wirkung einer zugeordneten Lüftfederanordnung stehende Anpressplatte, welche mit der Gehäuseanordnung zur gemeinsamen Drehung um eine Drehachse und in Richtung der Drehachse bezüglich der Gehäuseanordnung verlagerbar gekoppelt ist, wenigstens ein Einrückersystem zur Erzeugung einer Einrückkraft, und wenigstens eine Kraftbeaufschlagungsanordnung zur Übertragung der Einrückkraft auf die Anpressplatte, um diese gegen die Wirkung der Lüftfederanordnung in Richtung der Drehachse in Einrückrichtung zu bewegen.

Erfindungsgemäß ist nach Aspekt B und Aspekt C vorgesehen, dass die Kraftbeaufschlagungsanordnung derart vorgespannt ist, dass sie an einer dem Einrückersystem zugeordneten Eingangsseite der Kraftbeaufschlagungsanordnung eine der am Beginn eines Einrückvorgangs wirkenden Einrückkraft entgegenwirkende Reaktionskraft bereitstellt.

Betreffend den Erfindungsvorschlag nach Aspekt A wird vor allem daran gedacht, dass die Reibungskupplung grundsätzlich einer herkömmlichen, an sich bekannten Konstruktion entspricht, und dass die Erfindung sich primär auf im Hinblick auf die angegebenen Aufgaben vorteilhafte bzw. die Erfindungsidee realisierende Auslegungen und Ausgestaltungen der Lüftfederanordnung und der Kraftbeaufschlagungsanordnung oder/und ggf. weiterer vorgesehener Federanordnungen bezieht, insbesondere hinsichtlich Kraft-Weg-Verhalten über den Einrückweg.

Betreffend den Vorschlag , nicht gemäß der Erfindung, nach Aspekt B und Aspekt C ist anzumerken, dass die Reibungskupplung sich aufgrund der vorgesehenen Vorspannung der Kraftbeaufschlagungsanordnung von herkömmlichen Konstruktionen grundsätzlich unterscheidet. Durch die Vorspannung der Kraftbeaufschlagungsanordnung ist es auf besonders einfache Weise möglich, eine Reibungskupplung vorzusehen, welche im Anfangsbereich der Einrückstrecke besser regelbar ist. Wird darüber hinaus eine Kraftbeaufschlagungsanordnung verwendet bzw. eine solche Vorspannung der Kraftbeaufschlagungsanordnung vorgesehen, welche beispielsweise ein im Wesentlichen neutrales oder degressives Kraft-Weg-Verhalten aufweist, so ist es im Übrigen vorteilhaft möglich, das Startniveau der Einrückkraft anzuheben, ohne dass das Kraftmaximum am Ende der Einrückstrecke so weit ansteigt, dass zur Betätigung der Kupplung eine erhöhte Betätigungskraft aufgewendet werden muss oder die Lebensdauer des Einrücklagers verringert wird. Nach dem Aspekt B und nach dem Aspekt C bezieht sich im Übrigen auch auf im Hinblick auf die angegebenen Aufgaben vorteilhafte bzw. die realisierende Auslegungen und Ausgestaltungen der Kraftbeaufschlagungsanordnung oder/und der hiermit zusammenwirkenden Komponenten, insbesondere hinsichtlich Kraft-Weg-Verhalten über den Einrückweg.

Im Folgenden werden nun zuerst geeignete oder besonders vorteilhafte Ausgestaltungen der Reibungskupplung nach dem Aspekt B und dem Aspekt C angegeben, die zumindest teilweise auch identisch oder angepasst für eine Ausgestaltung der Reibungskupplung nach dem Aspekt A in Betracht kommen:

Abhängig vom Aufbau der Kupplung kann die Kraftbeaufschlagungsanordnung entweder in ihrem radial äußeren Randbereich bezüglich der Gehäuseanordnung und in einem radial weiter innen gelegenen Bereich bezüglich der Anpressplatte abgestützt sein, oder in ihrem radial äußeren Randbereich bezüglich der Anpressplatte und in einem radial weiter innen gelegenen Bereich bezüglich der Gehäuseanordnung abgestützt sein, wobei der jeweilige Abstützpunkt bezüglich der Gehäuseanordnung als Drehpunkt bzw. Drehlager der Kraftbeaufschlagungsanordnung dient.

Wenn als Kraftbeaufschlagungsanordnung beispielsweise eine Membranfeder verwendet wird, kann die Vorspannung der Kraftbeaufschlagungsanordnung dadurch erreicht werden, dass eine Membranfeder mit einer von der Härtestellung (Fertigungslage) abweichenden Einbaulage verwendet wird, d.h. das die Membranfeder vor, während oder nach dem Einbau in die Kupplungen vom Normal-Offen-Typ beispielsweise über entsprechend ausgebildete Anschläge so im Kupplungsgehäuse verspannt wird, dass sie die gewünschte Reaktionskraft bereitstellt.

Um jedoch zu verhindern, dass eine Kraftbeaufschlagungsanordnung mit einer von der Einbaulage abweichenden Fertigungslage von ihrem gehäuseseitigen Drehpunkt abheben kann, was dadurch zustande käme, dass die Kraftbeaufschlagungsanordnung bestrebt ist, sich in eine kraftlose Position zu bewegen, kann die Kraftbeaufschlagungsanordnung durch einen Gegenhalt an ihrem Drehpunkt festgehalten werden. Eine besonders bevorzugte Ausgestaltungsform ergibt sich dabei dadurch, dass die Kraftbeaufschlagungsanordnung bezüglich der Gehäuseanordnung in beiden axialen Richtungen abgestützt ist, was eine definierte Festlegung der Kraftbeaufschlagungsanordnung im Abstützbereich an der Gehäuseanordnung ermöglicht.

Um in einfacher Art und Weise die Kraftbeaufschlagungsanordnung am Gehäuse abstützen zu können, insbesondere in dem Falle, in dem diese Abstützung im radial äußeren Bereich der Kraftbeaufschlagungsanordnung erfolgt, wird vorgeschlagen, dass die Abstützung in einer ersten axialen Richtung über ein an einem Bodenbereich des Gehäuses sich abstützendes erstes Abstützelement erfolgt. Die Abstützung in der zweiten axialen Richtung kann beispielsweise über an dem Gehäuse integral vorgesehene, durch Umformung des Gehäuses gebildete Abstützbereiche erfolgen.

Bei einer alternativen Variante ist es möglich, dass die Abstützung in einer zweiten axialen Richtung über ein mit dem Gehäuse axial fest verbundenes zweites Abstützelement erfolgt. Dieses zweite Abstützelement kann beispielsweise mit dem Gehäuse durch Formschluss, durch Materialschluss, insbesondere Verschweißung, oder unter Einsatz von Befestigungselementen, wie z.B. Nietbolzen, Schraubbolzen oder dergleichen, erfolgen.

Bei einer weiteren alternativen Variante zur beidseitigen axialen Abstützung der Kraftbeaufschlagungsanordnung an dem Gehäuse wird vorgeschlagen, dass das Gehäuse ein erstes Gehäusebauteil umfasst, an dem die Abstützung in einer ersten axialen Richtung erfolgt, und ein zweites Gehäusebauteil umfasst, an dem die Abstützung in einer zweiten axialen Richtung erfolgt. Dabei kann das erste Gehäusebauteil am zweiten Gehäusebauteil getragen sein oder die beiden Gehäusebauteile können beispielsweise über gemeinsame Befestigungselemente an einem gemeinsamen Träger fest getragen sein.

Wie bereits angesprochen, kann die Vorspannung der Kraftbeaufschla-gungsanordnung beispielsweise dadurch erreicht werden, dass die Kraftbeaufschlagungsanordnung bezüglich des Kupplungsgehäuse verspannt wird, d.h. dass die Kraftbeaufschlagungsanordnung so in einem maximal entspannten Zustand beispielsweise durch eine Abstützung an einer Vorspannanschlaganordnung in einem Vorspannzustand gehalten wird, dass sie die gewünschte Reaktionskraft bereitstellt. Vorteilhaft kann dabei vorgesehen sein, dass die Vorspannanschlaganordnung vom Einrückersystem gebildet wird, d.h., dass der Vorspannzustand durch die Anlage der Kraftbeaufschlagungsanordnung am Kupplungsgehäuse und am Einrückersystem erreicht wird, oder dass die Vorspannanschlaganordnung an der Gehäuseanordnung vorgesehen ist, d.h., dass der Vorspannzustand durch die Anlage der Kraftbeaufschlagungsanordnung an wenigstens zwei voneinander beabstandeten Bereichen des Kupplungsgehäuses erreicht wird.

Dabei kann beispielsweise vorgesehen sein, dass die Vorspannanschlaganordnung einen radial äußeren Randbereich der Kraftbeaufschlagungsanordnung abstützt, wobei die Abstützung beispielsweise über Materialvorsprünge am Gehäuse oder so genannte Drahtringe erfolgen kann, welche als Auflager bzw. Anschläge für die Kraflbeaufschlagungsanordnung dienen.

Weiterhin kann vorgesehen sein, dass die Vorspannanschlaganordnung in einem gegenüber dem äußeren Randbereich der Kraftbeaufschlagungsanordnung radial weiter innen gelegenen Bereich zur Abstützung vorgesehen ist. Diesbezüglich sind wiederum beispielsweise Materialvorsprünge am Gehäuse oder zwischen der Kraftbeaufschlagungsanordnung und dem Gehäuse vorgesehene Drahtringe denkbar, wobei zusätzliche Vorspannelemente beispielsweise in der Form von Spannbolzen vorgesehen sein können, um die Kraftbeaufschlagungsanordnung vorzuspannen.

Zweckmäßig kann weiterhin vorgesehen sein, dass die Abstützung innerhalb des Bereichs erfolgt, in welchem die Anpressplatte an der Kraftbeaufschlagungsanordnung abgestützt ist.

Weiterhin kann vorgesehen sein, dass die Kraftbeaufschlagungsanordnung wenigstens ein Membranfederelement umfasst oder/und dass die Kraftbeaufschlagungsanordnung mehrere Hebelelemente umfasst, welche in Richtung Ausrücken vorgespannt sind, wobei den Hebelelementen Vorspannelemente zugeordnet sein können, welche die Hebelelemente in Richtung Ausrücken vorspannen.

Weiterhin kann vorgesehen sein, dass die Reibungskupplung eine Doppelkupplung mit zwei Kupplungsbereichen ist, wobei die Kraftbeaufschlagungsanordnung in dem einen Kupplungsbereich in ihrem radial äußeren Randbereich bezüglich der Gehäuseanordnung und in einem radial weiter innen gelegenen Bereich bezüglich der Anpressplatte abgestützt ist und wobei die Kraftbeaufschlagungsanordnung in dem anderen Kupplungsbereich in ihrem radial äußeren Randbereich bezüglich der Anpressplatte und in einem radial weiter innen gelegenen Bereich bezüglich der Gehäuseanordnung abgestützt ist.

Bereitgestellt vor allem nach Aspekt B und nach Aspekt C wird ferner auch eine Reibungskupplung, umfassend eine Gehäuseanordnung, eine Anpressplatte, welche mit der Gehäuseanordnung zur gemeinsamen Drehung um eine Drehachse und in Richtung der Drehachse bezüglich dieser verlagerbar gekoppelt ist, ein Einrückersystem zur Erzeugung einer Einrückkraft, eine Kraftbeaufschlagungsanordnung zur Übertragung der Einrückkraft auf die Anpressplatte, wobei die Kraftbeaufschlagungsanordnung in ihrem radial äußeren Randbereich bezüglich der Gehäuseanordnung und in einem radial weiter innen gelegenen Bereich bezüglich der Anpressplatte abgestützt ist, und wobei die Kraftbeaufschlagungsanordnung bezüglich der Gehäuseanordnung in beiden axialen Richtungen abgestützt ist. Eine derart ausgestaltete Reibungskupplung kann selbstverständlich kombiniert sein mit allen vorangehend beschriebenen Merkmalsgruppen, entweder einzeln oder in Kombination, insbesondere denjenigen Merkmalsgruppen, die sich auf die beidseitige axiale Abstützung der Kraftbeäufschlagungsanordnung am Gehäuse beziehen.

Im Folgenden werden bevorzugte Ausgestaltungen bzw. Auslegungen der Reibungskupplung nach Aspekt A bzw. deren relevanten Komponenten angegeben, die zumindest teilweise auch identisch oder angepasst als Ausgestaltungen bzw. Auslegungen der Reibungskupplung nach Aspekt B und Aspekt C bzw. deren Komponenten in Betracht kommen:

Um trotz geringer Gegenkräfte zu Beginn des Einrückvorgangs bzw. am Anfang des Einrückwegs aufgrund der Lüftfederanordnung und der Kraftbeaufschlagungsanordnung eine gute Regelbarkeit des Einrückens vorzusehen, kann das Einrückersystem vorteilhaft mit einer Vorspannfederanordnung ausgeführt sein, die eine einer am Beginn eines Einrückvorgangs wirkenden Betätigungskraft eines Krafterzeuger des Einrücksystems entgegenwirkende Gegenkraft bereitstellt, wobei die Einrückkraft die aus der Betätigungskraft und der Gegenkraft resultierende Kraft ist.

Die Reibungskupplung kann sich durch ein zumindest bereichsweise neutrales oder/und zumindest bereichsweise leicht progressives oder/und zumindest bereichsweise degressives Kraft-Weg-Verhalten der im Zuge eines Einrückvorgangs einsetzenden bzw. sich verstärkenden Reaktionskraft der Kraftbeaufschlagungsanordnung auszeichnen. Hierzu ist zu erläutern, dass hier unter einem "neutralen Kraft-Weg-Verhalten" ein solches Verhalten verstanden wird, das einer von der Auslenkung unabhängigen Federkonstante entspricht. Unter einem "degressiven Kraft-Weg-Verhalten" wird ein solches Verhalten verstanden, das einer mit der Auslenkung abnehmenden Federkonstante entspricht. Unter einem "progressiven Kraft-Weg-Verhalten" wird ein solches Verhalten verstanden, das einer mit der Auslenkung zunehmenden Federkonstante entspricht. Es ist ferner anzumerken, dass es durchaus im Rahmen der Erfindung nach Aspekt A liegt und als besonders vorteilhaft erachtet wird, wenn die Kraftbeaufschlagungsanordnung auch im Zuge eines Einrückvorgangs keine wesentliche Reaktionskraft liefert, wie dies beispielsweise durch eine im Wesentlichen unelastische Heberinganordnung im Prinzip erreichbar ist.

Vorteilhaft erscheint insbesondere ein insgesamt leicht progressives oder - vorzugsweise - neutrales Krafl-Weg-Verhalten der Reaktionskraft der Kraftbeaufschlagungsanordnung. Besonders vorteilhaft erscheint ein solches Kraft-Weg-Verhalten, das im Wesentlichen oder zumindest näherungsweise einer linearen Federkennlinie entspricht.

Die Gegenkraft der Lüftfederanordnung kann sich durch ein zumindest bereichsweise neutrales oder/und zumindest bereichsweise progressives oder/und zumindest bereichsweise degressives Kraft-Weg-Verhalten auszeichnen. Vorteilhaft erscheint insbesondere ein insgesamt neutrales Kraft-Weg-Verhalten der Gegenkraft der Lüftfederanordnung, besonders bevorzugt ein solches Kraft-Weg-Verhalten, das im Wesentlichen oder zumindest näherungsweise einer linearen Federkennlinie entspricht.

Es wird weiterbildend vorgeschlagen, dass die der Einrückkraft entgegenwirkende Reaktionskraft von einem Minimum oder einem verschwindenden Kraftwert zu Beginn eines Einrückwegs der Anpressplatte entlang dem Einrückweg in Einrückrichtung kontinuierlich zunimmt, vorzugsweise über den gesamten möglichen Einrückweg. Dabei kann vorteilhaft vorgesehen sein, dass über den Einrückweg zumindest zwischen dem Beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt die an der Eingangsseite wirksame Summe aus der Reaktionskraft und einer durch die Kraftbeaufschlagungsanordnung übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte bzw. auf die Gegenkraft am Beginn des Einrückwegs. Ist die dem Einrückersystem zugeordnete Vorspannfederanordnung vorgesehen, so wird weiterbildend vorgeschlagen, dass über den Einrückweg zumindest zwischen dem Beginn und dem Schließpunkt die am Krafterzeuger wirksame Summe aus der hierhin übertragenen Reaktionskraft und der hierhin übertragenen Gegenkraft beruhend auf der Wirkung der Lüftfederanordnung sowie der Gegenkraft der Vorspannfederanordnung in Einrückrichtung zunimmt, vorzugsweise näherungsweise konstant bleibend oder in Einrückrichtung leicht ansteigend bezogen auf die Summe der Kräfte am Beginn des Einrückwegs.

Wesentlich an diesen Vorschlägen ist, dass ausgehend von der Gegenkraft am Anfang des Einrückwegs die von der Lüftfederanordnung und der Kraftbeaufschlagungsanordnung gelieferten, im Zuge des Einrückens ansteigenden Gegenkräfte nur leicht und idealerweise stetig ansteigen sollen, damit zum Ende des Einrückwegs hin das Einrückersystem gegenüber der für die Bereitstellung der Anpresskraft im Kupplungsbereich benötigten Kraftkomponente keine übermäßigen Zusatzkräfte aufbringen muss. Insoweit kommt es auch weniger auf das Vorsehen eines Reibbelagverschleißausgleichs an, da über einen verlängerten Einrückwegabschnitt zwischen dem Schließpunkt im Falle des Ursprungszustand ohne Reibbelagverschleiß und dem sich infolge von Reibbelagverschleiß ergebenden Schließpunkt die von dem Einrückersystem zusätzlich aufzubringenden Kräfte bei einer entsprechenden Auslegung der genannten Komponenten ebenfalls nur gering ansteigen wird. Insoweit kann es bei dem vorzugsweise vorzusehenden Reibbelagverschleißausgleich (beispielsweise nach dem System Xtend) durchaus primär nur darum gehen, einen Wegausgleich (anstelle eines Betätigungskraftausgleichs) vorzusehen.

In diesem Zusammenhang wird konkret vorgeschlagen, dass über einen aufgrund von Reibbelagverschleiß verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte bzw. auf die Gegenkraft am Beginn des Einrückwegs.

Bezogen auf die Ausgestaltung mit der dem Einrückersystem zugeordneten Vorspannfederanordnung wird weiter vorgeschlagen, dass zumindest zwischen der Position entsprechend dem Schließpunkt im Zustand ohne Reibbelagverschleiß und dem aus dem Reibbelagverschleiß folgenden Schließpunkt die am Krafterzeuger wirksame Summe aus der hierhin übertragenen Reaktionskraft und der hierhin übertragenen Gegenkraft beruhend auf der Wirkung der Lüftfederanordnung sowie der Gegenkraft der Vorspannfederanordnung in Einrückrichtung zunimmt, vorzugsweise näherungsweise konstant bleibend oder in Einrückrichtung leicht ansteigend bezogen auf die Summe der Kräfte am Beginn des Einrückwegs.

Wenn in diesem Zusammenhang bei an sich ansteigenden Kräften von "näherungsweise konstant bleibend" gesprochen wird, so bezieht sich dies darauf, dass bezogen auf das Ursprungskraftniveau am Anfang des Einrückwegs die betreffende Kraft bzw. Kraftsumme nur so ansteigen soll, dass in einer technischen Sichtweise.davon gesprochen werden kann, dass keine bedeutsame Zunahme der Kraft bzw. Kraftsumme auftritt, diese also "näherungsweise" konstant bleibt.

Als besonders vorteilhaft wird erachtet, wenn bezogen auf einen Zustand maximal möglichen Reibbelagverschleißes bei noch bestehender Funktionsfähigkeit der Reibungskupplung über den verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte am Beginn des Einrückwegs.

Bezug nehmend auf die Ausgestaltung mit der dem Einrückersystem zugeordneten Vorspannfederanordnung erscheint insbesondere eine solche Ausgestaltung bzw. Auslegung vorteilhaft, bei der zumindest zwischen der Position entsprechendem Schließpunkt im Zustand ohne Reibbelagverschleiß und dem aus dem Reibbelagverschleiß folgenden Schließpunkt die am Krafterzeuger wirksame Summe aus der hierhin übertragenen Reaktionskraft und der hierhin übertragenen Gegenkraft beruhend auf der Wirkung der Lüftfederanordnung sowie der Gegenkraft der Vorspannfederanordnung in Einrückrichtung zunimmt, vorzugsweise näherungsweise konstant bleibend oder in Einrückrichtung leicht ansteigend bezogen auf die Summe der Kräfte am Beginn des Einrückwegs.

In der Regel wird die Reibfläche elastisch nachgiebig ausgeführt sein, beispielsweise durch Vorsehen einer Reibbelagfederung. Hierzu wird weiterbildend vorgeschlagen, dass über den Einrückweg ab Schließpunkt in Einrückrichtung die an der Eingangsseite wirksame Summe aus der Reaktionskraft und der durch die Kraftbeaufschlagungsanordnung übertragenen Gegenkraft beruhend auf der Wirkung der Lüftfederanordnung und einer durch die Kraftbeaufschlagungsanordnung übertragenen weiteren Gegenkraft beruhend auf der elastischen Nachgiebigkeit der Reibfläche in Einrückrichtung zunimmt, vorzugsweise in einem sich an den Schließpunkt anschließenden Einrückwegabschnitt in Einrückrichtung leicht ansteigend bezogen auf die Summe der Kräfte am Beginn des Einrückwegs. Bezug nehmend auf die Ausgestaltung mit der dem Einrückersystem zugeordneten Vorspannfederanordnung wird in diesem Zusammenhang insbesondere daran gedacht, dass über den Einrückweg ab Schließpunkt in Einrückrichtung die am Krafterzeuger wirksame Summe aus der hierhin übertragenen Reaktionskraft und der hierhin übertragenen Gegenkraft beruhend auf der Wirkung der Lüftfederanordnung sowie der Gegenkraft der Vorspannfederanordnung in Einrückrichtung zunimmt, vorzugsweise in einem sich an den Schließpunkt anschließenden Einrückwegabschnitt näherungsweise konstant bleibend oder in Einrückrichtung leicht ansteigend bezogen auf die Summe der Kräfte am Beginn des Einrückweg.

Allgemein wird insbesondere in Bezug auf die erfindungsgemäße Reibungskupplung nach Aspekt A vorgeschlagen, dass die Kraftbeaufschlagungsanordnung als geschwächte Membranfeder oder als Hebelringanordnung, vorzugsweise als an einem Umfang einteilig zusammenhängende Hebelringanordnung, ausgeführt ist, die - wenn ihr eine Härtestellung zuordenbar ist - zu Beginn des Einrückwegs im Wesentlichen entsprechend ihrer Härtestellung in der Reibungskupplung angeordnet ist. Dabei kann zweckmäßig vorgesehen sein, dass die Membranfeder bzw. Hebelringanordnung einen an einem Außenumfang vorzugsweise mit Schwächungsausparungen oder Schwächungsschlitzen ausgeführten Ringabschnitt und von diesem nach innen vorstehende Federzungen oder Hebel aufweist, wobei innen liegende Federzungenenden oder Hebelenden vorzugsweise die Eingangssseite bilden.

Beispielsweise kann die Membranfeder bzw. die Hebelringanrodnung einen Härtewinkel von etwa 0 Grad oder - anders ausgedrückt - keinen Härtewinkel aufweisen. Man kann also eine im Ruhezustand völlig plane Membranfeder bzw. Hebelringanordnung verwenden.

Besonders bevorzugt wird vorgeschlagen, dass die Kraftbeaufschlagungsanordnung, ggf. Membranfeder oder Hebelringanordnung, oder eine die Kraftbeaufschlagungsanordnung vorspannende Vorspann-Federanordnung einer S-förmigen Federkennlinie genügt, wobei dem Einrückweg ein in Einrückrichtung vorzugsweise zumindest näherungsweise linear ansteigender Federkennlinienabschnitt zugeordnet ist, oder dass die Kraftbeaufschlagungsanordnung, ggf. Membranfeder oder Hebelringanordnung, einer zumindest näherungsweise linear ansteigenden Federkennlinie genügt.

Es wurde schon die Möglichkeit angesprochen, dass die Lüftfederanordnung als Tangentialblattfederanordnung ausgeführt sein kann. Dies erscheint auch im Zusammenhang mit der Reibungskupplung nach Erfindungsaspekt A besonders zweckmäßig. Es kommt durchaus aber auch in Betracht, eine andersartige Federanordnung, etwa eine Tellerfederanordnung, anstelle einer Tangentialblattfederanordnung zu verwenden, die beispielsweise zumindest bereichsweise ein degressives Kraft-Weg-Verhalten, ggf. sogar entsprechend einer fallenden Federkennlinie liefert. Man kann dann am Anfang des Einrückwegs eine vergleichsweise große, von der so ausgeführten Lüftfederanordnung bereitgestellte Gegenkraft vorsehen, ohne dass dies entsprechend große Gegenkräfte am bzw. gegen Ende des Einrückwegs zur Folge hat. Auch andere Federanordnungen, die eine solche Kraft-Weg-Charakteristik liefern können, kommen vorteilhaft in Betracht.

In der Regel wird man aber wohl Lüftfederanordnungen bisher üblicher Art, wie Tangentialblattfederanordnungen, vorsehen wollen, die selbst zumindest näherungsweise ein neutrales Kraft-Weg-Verhalten, vorzugsweise lineares Kraft-Weg-Verhalten liefern oder zumindest nur ein leicht progressives oder leicht degressives Kraft-Weg-Verhalten. Insbesondere für eine solche Auslegung bzw. Ausgestaltung der Lüftfederanordnung, aber auch allgemein wird vorgeschlagen, dass die Lüftfederanordnung als weiche Federanordnung ausgeführt ist und weit vorgespannt in der Reibungskupplung eingebaut ist, um einerseits am Beginn eines Einrückens (und damit auch im Ruhezustand) eine hinreichende Gegenkraft bereitzustellen und andererseits nur einen sanften Anstieg der Gegenkraft beim Einrücken vorzusehen. Es wird hierzu als geeignet vorgeschlagen, dass die Lüftfederanordnung einen Steifigkeitswert kleiner gleich etwa 125 N/mm, vorzugsweise kleiner gleich etwa 100 N/mm aufweist.

Ferner wird in diesem Zusammenhang als geeignet vorgeschlagen, dass die Lüftfederanordnung einen solchen Steifigkeitswert aufweist und die Gegenkraft der Lüftfederanordnung derart durch die Kraftbeaufschlagungsanordnung übertragen (beispielsweise mit einer Übersetzungs-/Untersetzungsfaktor von etwa 4) wird, dass an der Eingangsseite der Kraftbeaufschlagungsanordnung ein auf die Lüftfederanordnung zurückzuführender Steifigkeitswertanteil kleiner gleich etwa 30 N/mm, vorzugsweise kleiner gleich etwa 25 N/mm auftritt.

Betreffend die Vorspannung der Lüftfederanordnung wird in diesem Zusammenhang als geeignet vorgeschlagen, dass die Lüftfederanordnung derart vorgespannt ist, dass sie am Beginn eines Einrückvorgangs eine Gegenkraft von wenigstens etwa 400 N, vorzugsweise von wenigstens etwa 500 N liefert. Ferner wird in diesem Zusammenhang vorgeschlagen, dass die Lüftfederanordnung derart vorgespannt ist und die Gegenkraft der Lüftfederanordnung derart durch die Kraftbeaufschlagungsanordnung übertragen (beispielsweise mit einem Übersetzungs/Untersetzungsfaktor von etwa 4) wird, dass an der Eingangsseite der Kraftbeaufschlagungsanordnung eine auf die Lüftfederanordnung zurückzuführende Gegenkraftkomponente von wenigstens etwa 100 N, vorzugsweise von wenigstens etwa 125 N auftritt.

Gemäß einer besonders bevorzugten Ausgestaltung ist die weich ausgeführte Lüftfederanordnung derart vorgespannt, dass über einen Einrückweg vom Schließpunkt bis zu einem Punkt maximaler Einrückung die Gegenkraft der Lüftfederanordnung um einen Kraftwert ansteigt, der maximal einem Drittel, vorzugsweise maximal einem Viertel, höchstvorzugsweise maximal einem Fünftel der am Beginn eines Einrückvorgangs von der Lüftfederanordnung gelieferten Gegenkraft entspricht.

Im Folgenden werden bevorzugte Ausgestaltungen und Auslegungen der Reibungskupplung nach Aspekt B und der Reibungskupplung nach Aspekt C bzw. deren relevanten Komponenten angegeben, die zumindest teilweise auch identisch oder angepasst als Ausgestaltungen bzw. Auslegungen Reibungskupplung nach Aspekt A bzw. deren Komponenten in Betracht kommen.

Allgemein gilt, dass ein zumindest bereichsweise neutrales oder/und zumindest bereichsweise leicht progressives oder/und zumindest bereichsweise degressives Kraft-Weg-Verhalten der Reaktionskraft der Kraftbeaufschlagungsanordnung vorgesehen sein kann. Hierzu ist zu erläutern, dass hier unter einem "neutralen Kraft-Weg-Verhalten" ein solches Verhalten verstanden wird, das einer von der Auslenkung unabhängigen Federkonstante entspricht. Unter einem "degressiven Kraft-Weg-Verhalten" wird ein solches Verhalten verstanden, das einer mit der Auslenkung abnehmenden Federkonstante entspricht. Unter einem "progressiven Kraft-Weg-Verhalten" wird ein solches Verhalten verstanden, das einer mit der Auslenkung zunehmenden Federkonstante entspricht.

Betreffend die Reibungskupplung nach Aspekt B der Erfindung werden vor allem folgende Ausgestaltungen bzw. Auslegungen als besonders vorteilhaft angesehen:

Zweckmäßig ist insbesondere ein insgesamt degressives, vorzugsweise stark degressives Kraft-Weg-Verhalten der Reaktionskraft der Kraftbeaufschlagungsanordnung. Wie erläutert, wird unter einem "degressiven Kraft-Weg-Verhalten" verstanden, das einer mit der Auslenkung abnehmenden Federkonstante entspricht. In diesem Zusammenhang ist es besonders bevorzugt, dass die der Einrückkraft entgegenwirkende Reaktionskraft der Kraftbeaufschlagungsanordnung von einem Maximum zu Beginn eines Einrückwegs der Anpressplatte (und damit in Ruhezustand bei vollständig ausgekuppelter Kupplung) entlang dem Einrückweg in Einrückrichtung kontinuierlich abnimmt, vorzugsweise über den gesamten möglichen Einrückweg. Hierdurch wird gewissermaßen von dem Einrückersystem aufgebrachte Kraft frei, um im Kupplungsbereich eine entsprechend hohe Anpresskraft für die Reibflächen zu bewirken.

Vorteilhaft kann vorgesehen sein, dass über den Einrückweg zumindest zwischen dem beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt, zumindest bezogen auf einen Zustand ohne wesentlichen Reibbelagverschleiß oder zumindest im Falle eines wirksamen Reibbelagverschleißausgleiches, die der Einrückkraft entgegenwirkende Reaktionskraft entlang dem Einrückweg in Richtung zum Schließpunkt abfällt, und zwar vorzugsweise zumindest näherungsweise linear. Bei einem solchen Verhalten kann auch bei nicht mehr eineindeutigem Zusammenhang zwischen Kraft und Position entlang dem Einrückweg eine gute Regelbarkeit der Kupplungsbetätigung erreicht werden. Zweckmäßig ist in dieser Hinsicht auch, wenn eine etwa in der Mitte zwischen dem Beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt liegender Einrückwegpunkt, zumindest bezogen auf einen Zustand ohne wesentlichen Reibbelagverschleiß oder zumindest im Falle eines wirksamen Reibbelagverschleißausgleiches, etwa mit einem Wendepunkt einer das degressive Kraft-Weg-Verhalten der Reaktionskraft der Kraftbeaufschlagungsanordnung beschreibenden Federkennlinie zusammenfällt.

Als besonders bevorzugt wird vorgeschlagen, dass über den Einrückweg zumindest zwischen dem Beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt die an der Eingangsseite wirksame Summe aus der Reaktionskraft und einer durch die Kraftbeaufschlagungsanordnung übertragenen Gegenkraft beruhend auf der Wirkung der Lüftfederanordnung in Einrückrichtung abnimmt oder - bezogen auf die Summe der Kräfte am Beginn des Einrückwegs - zumindest näherungsweise konstant bleibt. Nach dieser Auslegung wird die im Zuge des Einrückens zunehmende Gegenkraft der Lüftfederanordnung durch das degressive Kraft-Weg-Verhalten der Kraftbeaufschlagungsanordnung bzw. deren Vorspannung kompensiert oder sogar überkompensiert, so dass das vom Einrückersystem bereitstellbare Kraftniveau in besonders hohem Maße für die Erzeugung der Anpresskräfte im Kupplungsbereich nutzbar ist.

Es wird in diesem Zusammenhang als geeignet vorgeschlagen, dass die Summe am Schließpunkt, zumindest bezogen auf einen Zustand ohne wesentlichen Reibbelagverschleiß oder zumindest im Falle eines wirksamen Reibbelagverschleißausgleiches, maximal etwa 90 %, vorzugweise maximal etwa 80 %, höchstvorzugsweise maximal etwa 60 % der Summe am Beginn entspricht.

Auftretender Reibbelagverschleiß kann in Bezug auf die Bereitstellung einer hinreichenden Anpresskraft im Kupplungsbereich beispielsweise dann keine Probleme mehr machen, wenn auf einem aufgrund von Reibbelagverschleiß verlängerten Einrückweg die Summe an einer Position entsprechend dem Schließpunkt im Zustand ohne Reibbelagverschleiß und - bezogen auf einen Zustand maximal möglichen Reibbelagverschleißes bei noch bestehender Funktionsfähigkeit der Reibungskupplung - die Summe an einer dem aus dem Reibbelagverschleiß folgenden Schließpunkt entsprechenden Position etwa gleich groß ist. Trotzdem wird ein Reibbelagverschleißausgleich oder allgemein Verschleißausgleich in der Regel zweckmäßig und sinnvoll sein, um zumindest einen Wegausgleich vorzusehen. Das Einrückersystem und die ggf. vorgesehene Betätigungsmechanik zwischen Einrückersystem und Kraftbeaufschlagungsanordnung braucht dann nur dafür ausgelegt sein, eine Betätigung entlang einem Einrückweg entsprechend dem Ursprungszustand ohne Verschleiß, idealerweise erhöht um eine Sicherheitsmarge, vorzusehen. Ist hingegen das Einrückersystem und die Betätigungsmechanik dafür ausgelegt, eine Betätigung entlang einem verlängerten Einrückweg bis zum einem Schließpunkt bei maximalem Belagverschleiß zu liefern, so könnte auf einen Verschleißausgleich durchaus verzichtet werden.

In diesem Zusammenhang wird allgemein vorgeschlagen, dass über einen aufgrund von Reibbelagverschleiß verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung abnimmt oder - bezogen auf die Summe der Kräfte am Beginn des Einrückwegs - zumindest näherungsweise konstant bleibt. Es wird dabei speziell daran gedacht, dass bezogen auf einen Zustand maximal möglichen Reibbelagverschleißes bei noch bestehender Funktionsfähigkeit der Reibungskupplung über den verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung abnimmt oder - bezogen auf die Summe der Kräfte am Beginn des Einrückwegs - zumindest näherungsweise konstant bleibt.

In der Regel wird die Reibfläche elastisch nachgiebig ausgeführt sein, beispielsweise durch Vorsehen einer Reibbelagfederung. Hierzu wird weiterbildend vorgeschlagen, dass über den Einrückweg ab Schließpunkt in Einrückrichtung die an der Eingangsseite wirksame Summe aus der Reaktionskraft und der durch die Kraftbeaufschlagungsanordnung übertragenen Gegenkraft beruhend auf der Wirkung der Lüftfederanordnung und einer durch die Kraftbeaufschlagungsanordnung übertragenen weiteren Gegenkraft beruhend auf der elastischen Nachgiebigkeit der Reibfläche in einem sich an den Schließpunkt anschließenden Einrückwegabschnitt in Einrückrichtung abnimmt oder - bezogen auf die Summe der Kräfte am Beginn des Einrückwegs - zumindest näherungsweise konstant bleibt. Nach dieser Auslegung kompensiert die degressive Charakteristik der Kraftbeaufschlagungsanordnung bzw. derer Vorspannung sogar ein Teil der ansteigenden Gegenkraft aufgrund der Elastizität der Reibfläche ab Schließpunkt, oder diese wird sogar überkompensiert. Dies bedeutet, dass ein besonders hoher Anteil der vom Einrückersystem bereitstellbaren Maximalkraft der Erzeugung der Anpresskräfte im Kupplungsbereich zugute kommen kann.

Vorteilhaft kann die Kraftbeaufschlagungsanordnung als Membranfeder oder als an einem Umfang einteilig zusammenhängende Hebelringanordnung ausgeführt sein. Es wird in diesem Zusammenhang vor allem daran gedacht, dass die Membranfeder bzw. Hebelringanordnung zumindest zu Beginn des Einrückwegs abweichend von ihrer Härtestellung in der Reibungskupplung angeordnet ist, um die Vorspannung der Kraftbeaufschlagungsanordnung zu erreichen.

Vorteilhaft kann die Membranfeder bzw. Hebelringanordnung einen an einem Außenumfang durchgehenden Ringabschnitt und von diesem nach innen vorstehende Federzungen oder Hebel aufweisen. Vorzugsweise bilden innen liegende Federzungenenden oder Hebelenden die Eingangsseite der Kraftbeaufschlagungsanordnung.

Für die Bereitstellung hinreichender Reaktionskräfte kann eine Membranfeder bzw. Hebelanordnung mit einem Standardhärtewinkel, beispielsweise einem Härtewinkel von 12 Grad bis 15 Grad, eingesetzt werden.

Es wird vor allem daran gedacht, dass die Kraftbeaufschlagungsanordnung, ggf. Membranfeder oder Hebelringanordnung, oder eine die Kraftbeaufschlagungsanordnung vorspannende Vorspann-Federanordnung einer S-förmigen Federkennlinie genügt, und dass dem Einrückweg ein in Einrückrichtung abfallender Federkennlinienabschnitt dieser Federkennlinie zugeordnet ist.

Betreffend die Reibungskupplung nach Aspekt C der Erfindung werden vor allem folgende Ausgestaltungen bzw. Auslegungen als besonders vorteilhaft angesehen:

Für die Reibungskupplung nach Aspekt C kommt ein insgesamt progressives oder insgesamt degressives oder insgesamt neutrales Kraft-Weg-Verhalten der Reaktionskraft der Kraftbeaufschlagungsanordnung in Betracht. Bevorzugt ist ein leicht progressives oder leicht degressives Kraft-Weg-Verhalten oder - besonders bevorzugt - ein im Wesentlichen insgesamt neutrales Kraft-Weg-Verhalten. Hierzu ist zu erläutern, dass hier unter einem "neutralen Kraft-Weg-Verhalten" ein solches Verhalten verstanden wird, das einer von der Auslenkung unabhängigen Federkonstante entspricht. Unter einem "degressiven Kraft-Weg-Verhalten" wird ein solches Verhalten verstanden, das einer mit der Auslenkung abnehmenden Federkonstante entspricht. Unter einem "progressiven Kraft-Weg-Verhalten" wird ein solches Verhalten verstanden, das einer mit der Auslenkung zunehmenden Federkonstante entspricht. Man kann dabei durchaus vorteilhaft anstreben, zumindest bereichsweise ein wenigstens näherungsweise lineares Kraft-Weg-Verhalten der Reaktionskraft der Kraftbeaufschlagungsanordnung zu erreichen.

Eine zweckmäßige Auslegung zeichnet sich aus durch ein leicht degressives Kraft-Weg-Verhalten der Reaktionskraft der Kraftbeaufschlagungsanordnung in einem ersten Einrückwegabschnitt und ein leicht progressives Kraft-Weg-Verhalten der Reaktionskraft der Kraftbeaufschlagungsanordnung in einem sich hieran anschließenden, einen Punkt maximaler Einrückung aufweisenden zweiten Einrückwegabschnitt.

Ferner kann man vorteilhaft eine solche Auslegung vorsehen, dass ein einem ausgekuppelten Ruhezustand entsprechende Anfangspunkt des Einrückwegs oder - zumindest bezogen auf einen Zustand ohne wesentlichen Reibbelagverschleiß oder zumindest im Falle eines wirksamen Reibbelagverschleißausgleiches - ein Einrückwegpunkt, der einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt entspricht, oder ein einem dieser Punkte eng benachbarter Einrückwegpunkt etwa mit einem Wendepunkt einer das Kraft-Weg-Verhalten der Reaktionskraft der Kraftbeaufschlagungsanordnung beschreibenden Federkennlinie zusammenfällt.

Es wird insbesondere daran gedacht, dass die der Einrückkraft entgegenwirkende Reaktionskraft von einem Minimum zu Beginn eines Einrückwegs der Anpressplatte entlang dem Einrückweg in Einrückrichtung kontinuierlich zunimmt, vorzugsweise über den gesamten möglichen Einrückweg. Dabei kann man durchaus vorteilhaft vorsehen, dass in einer näherungsweisen Betrachtung die der Einrückkraft entgegenwirkende Reaktionskraft über einen gewissen Bereich, beispielsweise in einem ersten Abschnitt des Einrückwegs im Anschluss an die Ruheposition, die Reaktionskraft im Wesentlichen konstant bleibt.

Man kann vorteilhaft vorsehen, dass über den Einrückweg zumindest zwischen dem Beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt die an der Eingangsseite wirksame Summe aus der Reaktionskraft und einer durch die Kraftbeaufschlagungsanordnung übertragenen Gegenkraft beruhend auf der Wirkung der Lüftfederanordnung in Einrückrichtung zunimmt, vorzugsweise näherungsweise konstant bleibend oder in Einrückrichtung leicht ansteigend bezogen auf die Summe der Kräfte am Beginn des Einrückwegs. Aus Sicht des Einrückersystems ist jedem Einrückwegpunkt genau eine Kraft eineindeutig zugeordnet, wodurch sich eine besonders gute Regelbarkeit des Einrückens und Ausrückens ergibt. Eine ggf. auftretende-Hysterese zwischen Einrücken und Ausrücken kann dabei geeignet berücksichtigt werden.

Nach einer geeigneten Auslegung kann man beispielsweise vorsehen, dass die Summe am Schließpunkt, zumindest bezogen auf einen Zustand ohne wesentlichen Reibbelagverschleiß oder zumindest im Falle eines wirksamen Reibbelagverschleißausgleiches, maximal etwa 200 %, vorzugweise maximal etwa 175 %, höchstvorzugsweise maximal etwa 150 % der Summe am Beginn entspricht.

Im Hinblick auf eine Reduzierung oder Vermeidung von Kraftverlusten aufgrund von Reibbelagverschleiß wird als besonders bevorzugt vorgeschlagen, dass über einen aufgrund von Reibbelagverschleiß verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung zunimmt, vorzugsweise näherungsweise konstant bleibend oder in Einrückrichtung leicht ansteigend bezogen auf die Summe der Kräfte am Beginn des Einrückwegs. Es ist in diesem Zusammenhang besonders zweckmäßig, wenn bezogen auf einen Zustand maximal möglichen Reibbelagverschleißes bei noch bestehender Funktionsfähigkeit der Reibungskupplung über den verlängerten Einrückweg zumindest zwischen einer Position entsprechend dem Schließpunkt im Zustand ohne Reibbelagverschleiß und dem aus dem Reibbelagverschleiß folgenden Schließpunkt die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung zunimmt, vorzugsweise näherungsweise konstant bleibend oder in Einrückrichtung leicht ansteigend bezogen auf die Summe der Kräfte am Beginn des Einrückwegs.

Ein vorzugsweise vorzusehender Verschleißausgleich ist dann vor allem im Hinblick auf einen Ausgleich einer Änderung des Einrückwegs von Bedeutung, weniger hingegen in Bezug auf die Bereitstellung hinreichender Betätigungskräfte bzw. hinreichender Anpresskräfte im Kupplungsbereich.

In der Regel wird die Reibfläche elastisch nachgiebig ausgeführt sein, beispielsweise durch Vorsehen einer Reibbelagfederung. In diesem Zusammenhang wird weiterbildend vorgeschlagen, dass über den Einrückweg ab Schließpunkt in Einrückrichtung die an der Eingangsseite wirksame Summe aus der Reaktionskraft und der durch die Kraftbeaufschlagungsanordnung übertragenen Gegenkraft beruhend auf der Wirkung der Lüftfederanordnung und einer durch die Kraftbeaufschlagungsanordnung übertragenen weiteren Gegenkraft beruhend auf der elastischen Nachgiebigkeit der Reibfläche in Einrückrichtung zunimmt, vorzugsweise in einem sich an den Schließpunkt anschließenden Einrückwegabschnitt näherungsweise konstant bleibend oder in Einrückrichtung leicht ansteigend bezogen auf die Summe der Kräfte am Beginn des Einrückwegs. Nach der angesprochenen bevorzugten Auslegung steht die vom Einrückersystem aufbringbare Kraft in besonders hohem Maße für die Erzeugung hoher Anpresskräfte im Kupplungsbereich für eine besonders hohe Momentenübertragungsfähigkeit zur Verfügung.

Die Kraftbeaufschlagungsanordnung kann als Membranfeder oder als an einem Umfang einteilig zusammenhängende Hebelringanordnung ausgeführt sein. Vorzugsweise ist die Membranfeder bzw. die Hebelringanordnung zumindest zu Beginn des Einrückwegs abweichend von ihrer Härtestellung in der Reibungskupplung angeordnet.

Die Vorspannung der Kraftbeaufschlagungsanordnung und die Nichtlinearität deren Federkennlinie sollen für die Reibungskupplung gemäß Aspekt C vorzugsweise geringer als für die Reibungskupplung gemäß Aspekt B sein. Man kann deshalb für die Reibungskupplung nach Aspekt C vorteilhaft eine geschwächte Membranfeder oder Hebelringanordnung vorsehen, wohingegen für die Reibungskupplung nach Aspekt. B zweckmäßig eine im Wesentlichen ungeschwächte oder normale Membranfeder eingesetzt werden könnte. In Bezug auf die Reibungskupplung nach Aspekt C wird insbesondere vorgeschlagen, dass die Membranfeder bzw. Hebelringanordnung einen an einem Außenumfang vorzugsweise mit Schwächungsaussparungen oder Schwächungsschlitzen ausgeführten Ringabschnitt und von diesem nach innen vorstehende Federzungen oder Hebel aufweist, wobei innen liegende Federzungenenden oder Hebelenden vorzugsweise die Eingangssseite bilden. Beispielsweise kann die Membranfeder bzw. Hebelringanordnung einen Härtewinkel von etwa 5 Grad aufweisen.

Die Kraftbeaufschlagungsanordnung (ggf. Membranfeder oder Hebelanordnung) oder eine die Kraftbeaufschlagungsanordnung vorspannende Vorspann-Federanordnung kann einer S-förmigen Federkennlinie genügen. Für diesen Ausgestaltungsfall' wird vorgeschlagen, dass dem Einrückweg ein in Einrückrichtung ansteigender, gewünschtenfalls bereichsweise zumindest näherungsweise konstant bleibender Federkennlinienabschnitt zugeordnet ist.

In Bezug auf die Reibungskupplung nach drei Aspekten A, B und C wird vor allem daran gedacht, dass wenigstens eine beidseitig mit Reibbelägen ausgeführte Kupplungsscheibe vorgesehen ist, die zwischen der Anpressplatte und einem Widerlager einspannbar ist. Es könnte sich auch um eine Zweischeiben- oder Mehrscheiben-Reibungskupplung handeln, mit wenigstens einer zwischen den Kupplungsscheiben angeordneten Zwischenplatte. Ferner kann die Reibungskupplung als Mehrfach-Kupplung, insbesondere Doppelkupplung, ausgeführt sein.

Die Reibungskupplung kann eine Verschleißausgleichseinrichtung bzw. - im Falle einer Mehrfach-Kupplung - mehrere Verschleißausgleichseinrichtungen aufweisen zum Vorsehen zumindest eines Einrückwegausgleichs im Falle von Reibbelagverschleiß.

Es ist noch auf Folgendes hinzuweisen. Vorstehend wurden bevorzugte Ausgestaltungen und Auslegungen teilweise unter Bezug auf einen angenommenen Reibbelagverschleiß und einen deswegen -verlängerten Einrückweg und dementsprechend verlagerten Schließpunkt und über den verlängerten Einrückweg erwünschte Kraft-Weg-Charakteristika definiert. Andererseits ist bevorzugt ein Verschleißausgleich durch eine geeignete Verschleißausgleichseinrichtung vorgesehen, so dass insoweit gar keine wesentliche Verlängerung des Einrückwegs durch Reibbelagverschleiß auftritt, die Funktionsfähigkeit der Verschleißausgleichseinrichtung vorausgesetzt. Die angegebenen bevorzugten Auslegungen und Ausgestaltungen, die von einem Reibbelagverschleiß ausgehen, sind insoweit als indirekte Definitionen gewünschter Kraft-Weg-Charakteristika anzusehen, die auch dann zweckmäßig sind, wenn aufgrund des Verschleißausgleiches der Einrückweg nicht wesentlich verlängert wird und dementsprechend die Kraft-Weg-Charakteristik über einen gegenüber dem Ausgangszustand hinzu gekommenen Eindrückweg-Verlängerungsabschnitt unmittelbar gar nicht zum Tragen kommt. Es ist für den Fachmann ohne weiteres möglich, bei einer Ausführungsform mit Verschleißausgleich die von einem Reibbelagverschleiß und einer Verlängerung des Einrückwegs bzw. Verlagerung des Schließpunkts ausgehenden Angaben als indirekte Definition erwünschter Auslegungen der genannten Komponenten, insbesondere der Kraftbeaufschlagungsanordnung und deren Vorspannung der Lüftfederanordnung, der Belagfederung und - wenn vorgesehen - der dem Einrückersystem zugeordneten Vorspannfederanordnung (eine solche könnte auch ohne weiteres bei den Reibungskupplungen nach Aspekt B und C vorgesehen sein) zu verstehen. Es braucht nämlich nur jeweils die Verschleißausgleichsvorrichtung weggedacht bzw. als nicht funktionsfähig angenommen bzw. im Falle einer konkret als Modell oder Muster vorliegenden Ausführungsform die Verschleißausgleichseinrichtung funktionsfähig gemacht werden, etwa durch reaktive Fixierung von sich zum Verschleißausgleich an sich zueinander verstellenden Bauteilen der Verschleißausgleichseinrichtung.

### Kurze Beschreibung der Zeichnungen

Die Erfindung wird im Folgenden anhand von in den Figuren gezeigten Ausführungsbeispielen näher erläutert.
- Fig. 1: eine Teillängsschnittansicht einer Doppelkupplung;
- Fig. 2: eine Ansicht entsprechend Fig. 1 einer weiteren Ausführungsform einer Doppelkupplung ;
- Fig. 3: eine Ansicht entsprechend Fig. 1 einer weiteren Ausführungsform einer Doppelkupplung ;
- Fig. 4: eine Ansicht entsprechend Fig. 1 einer weiteren Ausführungsform einer Doppelkupplung ;
- Fig. 5: eine vergrößerte Teillängsschnittansicht gemäß einer weiteren Ausführungsform einer Kupplung;
- Fig. 6: ein der Fig. 1 entsprechende Darstellung einer Doppelkupplung mit einer alternativen Variante der beidseitigen axialen Abstützung einer Kraftbeaufschlagungsanordnung;
- Fig. 7-9: verschiedene Varianten eines ringartigen Abstützelements;
- Fig. 10: zeigt eine weitere Doppelkupplung in Übereinstimmung mit der Erfindung mit im Ruhezustand vorgespannten Kraftbeaufschlagungsanordnungen;
- Fig. 11: zeigt demgegenüber eine Ausführungsform einer Doppelkupplung in Übereinstimmung mit der Erfindung mit im Ruhezustand im Wesentlichen nicht vorgespannten Kraftbeaufschlagungsanordnungen;
- Fig. 12-17: zeigen Beispiele von bei den Kopplungen oder Doppelkupplungen vorteilhaft verwendbaren Membranfedem bzw. Hebelringanordnungen, abgestimmt auf die Kupplungen nach den Aspekten A, B und C;
- Fig. 18-23: zeigen Diagramme, die die Kraft-Weg-Charakteristik an verschiedenen Stellen bzw. Komponenten einer Doppelkupplung nach Aspekt A, einer Doppelkupplung nach Aspekt B und einer Doppelkupplung nach Aspekt C als Funktion des Betätigungswegs bzw. Einrückwegs beispielhaft angeben.

### Wege zur Ausführung der Erfindung

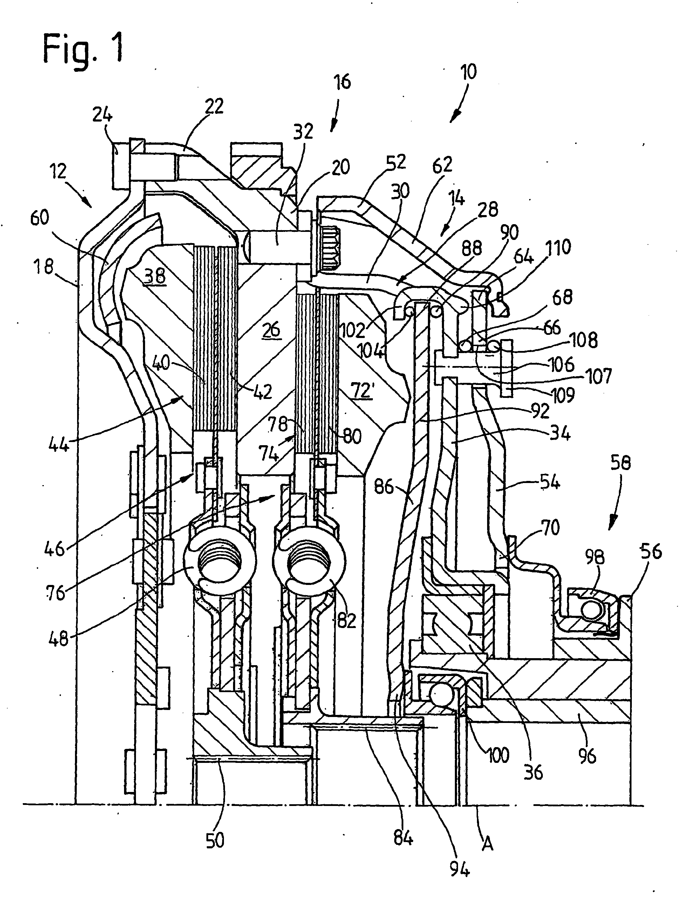

Bezug nehmend auf Fig. 1 bis 9 werden im Folgenden Beispiele für Reibungskupplungen nach den Aspekten B und C gegeben. Auf Grundlage dieser Konstruktionen kann dann durch Vorsehen einer entsprechenden Auslegung oder Ausgestaltung der insoweit relevanten Komponenten, insbesondere des Hebelrings bzw. der Membranfeder, wahlweise eine Reibungskupplung nach Aspekt B oder eine Reibungskupplung nach Aspekt C bereitgestellt werden. Durch geringfügige Modifikation, nämlich durch entsprechende Auslegung der einschlägigen Komponenten, insbesondere der Lüftfederanordnung und der Membranfeder bzw. des Hebelrings, insbesondere erhöhte Vorspannung der Lüftfederanordnung und reduzierte oder keine Vorspannung der Membranfeder bzw. des Hebelrings und ggf. schwächere Auslegung derselben/desselben kann ferner auf Grundlage dieser Konstruktionen einer Reibungskupplung nach Aspekt A bereitgestellt werden.

Zweckmäßig kann bei diesen Konstruktionen eine Verschleißnachstellvorrichtung integriert werden, beispielsweise nach dem System "Xtend" der Anmelderin. Es wird beispielsweise auf die DE 199 10 858 A1 verwiesen. . Es sei hier lediglich kurz ausgeführt, dass eine solche Verschleißnachstellvorrichtung zweckmäßig zwei bezüglich einander verdrehbare Nachstellringe aufweisen kann, von welchen einer an der Anpressplatte abgestützt ist und der andere durch die Kraftbeaufschlagungsanordnung (etwa die Membranfeder oder der Hebelring) beaufschlagt wird. An ihren einander zugewandten Seiten weisen solche Nachstellringe zueinander komplementäre Schrägflächen auf. Unter der Vorspannwirkung einer zugeordneten Feder führt eine Relativverdrehung der beiden Nachstellringe zur Vergrößerung der Axialerstreckung der diese beiden Ringe umfassenden Baugruppe. Zugeordnet kann ein beispielsweise blattfederartig ausgebildetes, etwa an der Anpressplatte festgelegtes erstes Erfassungselement sein, das sich nach radial außen erstreckt und den einen Nachstellring übergreift, wobei es unter seiner elastischen Vorspannkraft an diesem Nachstellring in Achsrichtung aufliegt und somit die beiden Nachstellringe gegeneinander und auch gegen die Anpressplatte presst. Beispielsweise in einem radial äußeren Bereich überlappt sich das erste Erfassungselement mit einem gehäusefesten zweiten Erfassungselement. Es kann ferner ein keilschieberartiges Arretierelement vorgesehen sein, welches mit seiner keilartigen Kontur unter Vorspannung einer Feder in einen zwischen dem ersten Erfassungselement und der Anpressplatte gebildeten Zwischenraum vorgespannt ist.

Tritt im Kupplungsbetrieb ein Verschleiß der Reibbeläge auf, so nähert sich die Anpressplatte in Achsrichtung der Widerlagerplatte an. Dabei bleibt das erste Erfassungselement radial außen am zweiten Erfassungselement hängen und hebt somit vom Nachstellring ab. In diesem Zustand stehen die Nachstellringe noch unter der Beaufschlagungswirkung der Kraftbeaufschlagungsanordnung und können deswegen keine Relativverdrehung bezüglich einander ausführen. Das keilartige Arretierelement kann sich jedoch, bedingt durch den größen werdenden Axialabstand zwischen der Anpressplatte und dem ersten Erfassungselement in seinem radial äußeren Bereich, geringfügig in Umfangsrichtung verlagern, bis es den vergrößerten axialen Zwischenraum zwischen der Anpressplatte und dem ersten Erfassungselement wieder vollständig ausführt. Bei Durchführung eines Ausrückvorgangs gibt die Kraftbeaufschlagungsanordnung ihre massive Beaufschlagungswirkung auf, so dass nunmehr die zwischen den beiden Nachstellringen anliegende Vorspannkraft ausreicht, die beiden Ringe bezüglich einander zu verdrehen, insbesondere durch Verdrehung nur des einen Nachstellrings relativ zur Anpressplatte. Der andere Nachstellring kann durch das erste Erfassungselement drehfest gehalten sein. Diese Relativverdrehung mit entsprechender Vergrößerung der Gesamtaxialerstreckung dieser Baugruppe hält an, bis der verdrehte Nachstellring wieder am ersten Erfassungselement zur Anlage kommt. Es ist dann exakt dasjenige Ausmaß an Axialverschleiß kompensiert worden, das zuvor durch die Wechselwirkung der beiden Erfassungselemente erfasst worden ist.

Herkömmlich dient ein derartiger Verschleißausgleich vor allem auch dazu, eine auf den Reibbelagverschleiß zurückzuführende Abnahme der maximalen Anpresskraft an den Reibflächen zu verhindern. Nach der vorliegenden Erfindung kann erreicht werden, dass die Bereitstellung hinreichender Anpresskräfte im Kupplungsbereich durch Reibbelagverschleiß nicht übermäßig beeinträchtigt wird, soweit es nur um die Bereitstellung entsprechender Betätigungskräfte durch das Einrückersystem als solches geht. Zweckmäßig erscheint ein Verschleißausgleich im Zusammenhang mit der Erfindung im ihren verschiedenen Aspekten aber insbesondere in Bezug auf einen Ausgleich bzw. eine Vermeidung einer Verlängerung des Einrückwegs infolge von Reibbelagverschleiß. Anzumerken ist noch, dass die Funktionsweise der Verschleißnachstellvorrichtung im Falle einer Kupplung vom NORMALERWEISE-OFFEN-Typ oder NORMAL-OFFEN-Typ analog zur Funktionsweise bei einer Kupplung vom NORMALERWEISE-GESCHLOSSEN-Typ oder NORMAL-GESCHLOSSEN-Typ ist.

Fig. 1 zeigt eine in einem Antriebsstrang zwischen einer Antriebseinheit und einem Getriebe angeordnete Doppelkupplung 10. Die Doppelkupplung 10 umfasst im Wesentlichen zwei Kupplungsbereiche 12, 14, durch welche wahlweise ein Drehmoment von einer Antriebswelle, beispielsweise Kurbelwelle einer Brennkraftmaschine, auf eine von zwei : zueinander koaxial angeordneten Getriebeeingangswellen übertragen werden kann.

Die Doppelkupplung 10 weist eine allgemein mit 16 bezeichnete und aus mehreren Teilen zusammengesetzte Gehäuseanordnung auf. Ein scheibenartiges Teil 18, das als Schwungrad, Sekundärmasse eines Zweimassenschwungrads, Mitnehmerblech o. dgl. ausgebildet sein kann, sorgt für die Drehankopplung der Doppelkupplung 10 an die bereits angesprochene Antriebswelle, beispielsweise einer Kurbelwelle einer Brennkraftmaschine. Ein Plattenteil 20 ist in einem radial äußeren, sich im Wesentlichen axial erstreckenden Abschnitt 22 über eine Mehrzahl von Schraubenbolzen 24 an das scheibenartige Teil 18 angebunden. Mit einem nach radial innen greifenden ringartigen Abschnitt 26 (nachfolgend als Widerlagerplatte 26 bezeichnet) bildet das Plattenteil 20 für die beiden nachfolgend noch genauer erläuterten Kupplungsbereiche 12, 14 der Doppelkupplung 10 einen Widerlagerbereich. Ein Gehäuseteil 28 ist mit seinem radial äußeren, sich ebenfalls im Wesentlichen axial erstreckenden Abschnitt 30 vermittels einer Mehrzahl von Schraubenbolzen 32 mit dem Plattenteil 20 fest verbunden. Ein nach radial innen greifender ringartiger Abschnitt bzw. Bodenbereich 34 des Gehäuseteils 28 dient zur Abstützung bzw. Drehlagerung an einem Getriebegehäuse o. dgl. über ein Lager 36.

Der erste Kupplungsbereich 12 der Doppelkupplung 10 umfasst eine Anpressplatte 38, die an einer axialen Seite der Widerlagerplatte 26 angeordnet ist. Zwischen dieser Anpressplatte 38 und der Widerlagerplatte 26 liegt die Reibbeläge 40, 42 umfassende Reibflächenanordnung 44 einer Kupplungsscheibe 46 des ersten Kupplungsbereichs 12. Im dargestellten Ausgestaltungsfall ist die Kupplungsscheibe 46 mit einem Torsionsschwingungsdämpfer 48 ausgebildet. In ihrem radial inneren Bereich ist die Kupplungsscheibe 46 über eine Nabe 50 derselben zur drehfesten Ankopplung an eine erste nicht dargestellte Antriebswelle bzw. Getriebeeingangswelle ausgebildet.

In ihrem radial äußeren Bereich ist die Anpressplatte 38 des ersten Kupplungsbereichs 12 mit der Widerlagerplatte 26 beispielsweise über nicht dargestellte Tangentialblattfedern o. dgl., die auch eine Lüftkraft erzeugen können, drehfest, bezüglich dieser jedoch in Richtung der Drehachse A der Doppelkupplung 10 bewegbar gekoppelt. Über eine Kraftübertragungsanordnung 52 und ein Kraftbeaufschlagungselement 54 kann eine Einrückkraft von einem ersten Betätigungselement 56 des Betätigungsmechanismus 58 auf die Anpressplatte 38 des ersten Kupplungsbereichs 12 übertragen werden. Die - Kraftübertragungsanordnung 52 umfasst zwei topf- oder schalenartig ausgebildete Kraftübertragungselemente 60, 62, welche die Widerlagerplatte 26 überbrücken und in ihrem radial äußeren Bereich miteinander verbunden sind. Das Kraftübertragungselement 60 kann die Anpressplatte 38 unter Zwischenlagerung einer nicht dargestellten Verschleißnachstellvorrichtung beaufschlagen. Das Kraftbeaufschlagungselement 54 ist in seinem radial äußeren Bereich 64 an dem Kraftübertragungselement 62 abgestützt und ist in seinem radial weiter innen liegenden Bereich 66 über einen Drahtring 68 o. dgl. an der Außenseite des topfartig ausgebildeten und mit der Widerlagerplatte 26 verbundenen Gehäuseteils 28, d.h. dem radial nach innen greifenden Abschnitt 34, abgestützt und wird in seinem radial inneren Bereich 70 von dem Betätigungselement 56 des Betätigungsmechanismus 58 beaufschlagt. Das Kraftbeaufschlagungselement 54 kann beispielsweise als Membranfeder ausgebildet sein, kann jedoch beispielsweise auch eine Kraftübertragungshebelanordnung mit mehreren in Umfangsrichtung verteilt angeordneten Hebelelementen umfassen.

Der zweite Kupplungsbereich 14 umfasst an der anderen axialen Seite der Widerlagerplatte 26 ebenfalls eine Anpressplatte 72, die mit der Widerlagerplatte 26 beispielsweise wiederum durch Tangentialblattfedern o. dgl., die auch eine Lüftkraft erzeugen können, drehfest, jedoch in Richtung der Achse A bewegbar verbunden ist. Zwischen Anpressplatte 72 und der Widerlagerplatte 26 liegt die Reibflächenanordnung 74 einer Kupplungsscheibe 76 des zweiten Kupplungsbereichs 14 mit ihren Reibbelägen 78, 80. Auch die Kupplungsscheibe 76 weist im dargestellten Ausgestaltungsfall einen Torsionsschwingungsdämpfer 82 auf. In ihrem radial inneren Bereich ist die Kupplungsscheibe 76 über eine Nabe 84 zur drehfesten Ankopplung an einer zur ersten (nicht gezeigten) Getriebeeingangswelle im Wesentlichen konzentrisch angeordneten zweiten (nicht gezeigten) Getriebeeingangswelle ausgebildet.

Ein Kraftbeaufschlagungselement 86 des zweiten Kupplungsbereichs 14 ist in seinem radial äußeren Bereich 88 über einen Drahtring 90 o. dgl. an der Innenseite des Gehäuseteils 28 abgestützt und kann in seinem radial weiter innen gelegenen Bereich 92 die Anpressplatte 72 beaufschlagen. Am radial inneren Ende 94 des Kraftbeaufschlagungselements 86 liegt ein Betätigungsbereich des zweiten Betätigungselements 96 des Betätigungsmechanismus 58 zur Beaufschlagung an. Auch das Kraftbeaufschlagungselement 84 kann als Membranfeder oder als eine Hebelanordnung ausgebildet sein. Bei einer Betätigung des zweiten Kupplungsbereichs 14 wird die Kupplungsscheibe 74 dieses Kupplungsbereichs 14 mit ihren Reibbelägen 78, 80 zwischen der Widerlagerplatte 26 und der Anpressplatte 72 geklemmt und damit eine Drehmomentübertragungsverbindung mittels der Nabe 84 zur anderen Getriebeeingangswelle hergestellt.

Die dargestellte Doppelkupplungsanordnung 10 ist vom Normal-Offen-Typ. Bei diesem Kupplungstyp dienen im Gegensatz zu Kupplungen vom Normal-Geschlossen-Typ die beiden Betätigungselemente 56, 96 des Betätigungsmechanismus 58 dazu, durch eine Beaufschlagung der verschiedenen Kraftbeaufschlagungselemente 54, 86 jeweils eine Einrückkraft zu erzeugen, mit welcher die Anpressplatten 38 bzw. 72 zum Einrücken des jeweiligen Kupplungsbereichs in Richtung der Widerlagerplatte 26 gepresst werden, wohingegen die Rückstellkraft für den Betätigungsmechanismus 58, d.h. die zum Öffnen der Kupplung notwendige Kraft, von der Kupplung selbst aufgebracht werden muss. Dabei sind die Kraftbeaufschlagungselemente 54, 86 der Kupplung vom Normal-Offen-Typ jedoch so ausgeführt, dass sie auf einem möglichst niedrigen Kraftniveau arbeiten. Bei den bekannten Lösungen wird die Rückstellkraft deswegen hauptsächlich von den nicht gezeigten Tangentialblattfedern bzw. Belagfedern erzeugt, welche hierbei so ausgelegt sind, dass die Rückstellkräfte bei offener Kupplung gerade noch ausreichen, die Kupplung sicher offen zu halten. Dementsprechend ist auch das Startniveau der Einrückkraft sehr niedrig, was problematisch ist, da derartig ausgeführte Systeme im vorderen Bereich der Einrückstrecke schwer regelbar sind, da dort kleine Kraftänderungen auf dem niedrigen Niveau im Einrücksystem bereits zu großen Wegänderungen am jeweiligen Einrücklager 98, 100 des jeweiligen Betätigungselements 56, 96 führen. Aus diesem Grunde wird das Startniveau der Einrückkraft angehoben, ohne jedoch, wenn möglich, entsprechend -das Kraftmaximum am Ende der Einrückstrecke anzuheben, so dass ein Abfall der Einrücklagerlebensdauer vermieden werden kann und eine Umgestaltung des Betätigungsmechanismus 58 zur Erzielung höherer Einrückkräfte (maximal erreichbarer Einrückkräfte) nicht notwendig ist.

Bei der in Fig. 1 dargestellten Ausführungsform der Erfindung sind aus diesem Grund die Kraftbeaufschlagungselemente 54, 86 mit einer von der Härtestellung (Fertigungslage) abweichenden Einbaulage in die Doppelkupplung 10 eingebaut. Durch diese Anordnung kann beispielsweise mit einer näherungsweise standardmäßigen Membranfeder eine Erhöhung des Startwerts der Einrückkraft erreicht werden. Um jedoch ein Abheben der Kraftbeaufschlagungselemente 54, 86 mit einer von der Einbaulage abweichenden Fertigungslage von ihrem gehäuseseitigen Drehpunkt, d.h. dem Drahtring 68 bzw. 86 zu verhindern, was durch das Bestreben der Kraftbeaufschlagungselemente 54, 86, sich in eine kraftlose Position zu bewegen, zustande käme, sind gemäß dieser Ausführungsform Gegenhalter vorgesehen, welche die Kraftbeaufschlagungselemente 54, 86 an ihrem jeweiligen Drehpunkt festhalten.

Wie in Fig. 1 zu sehen ist, ist der radial äußere Bereich 88 des Kraftbeaufschlagungselements 86 des zweiten Kupplungsbereichs 14 zwischen dem als Drehpunkt wirkenden Drahtring 90 und einem weiteren Drahtring 104, welcher von einer nach innen gebogenen Lasche 102 des horizontal verlaufenden Abschnitts 30 des Gehäuseteils 28 fixiert ist, bezüglich der Gehäuseanordnung 16 in beiden axialen Richtungen abgestützt, um ein Abheben des Kraftbeaufschlagungselements 86 von ihrem Drehpunkt, dem Drahtring 90, zu verhindern. Die Vorspannung des Kraftbeaufschlagungselements 86 wird bei diesem Ausführungsbeispiel entweder durch die Anlage des Kraftbeaufschfagungselements 86 an der Innenseite des nach radial innen greifenden ringartigen Abschnitts 34 des Gehäuseteils 28 bzw. die Anlage des radial inneren Endes 94 des Kraftbeaufschlagungselements 86 am Einrücklager 100 erzeugt, welche jeweils das Kraftbeaufschlagungselement in der Richtung weg vom Betätigungsmechanismus 58 drücken.

Zur Festlegung bzw. Verspannung des Kraftbeaufschlagungselements 54 des ersten Kupplungsbereichs 12 dient ein an dem radial nach innen greifenden Abschnitt 34 des Gehäuseteils 28 beispielsweise durch Vernieten festgelegter Distanzbolzen 106, welcher eine Öffnung 107 des Kraftbeaufschlagungselements 54 durchgreift und über einen an dem Kopf 109 des Distanzbolzens 106 anliegenden Drahtring 108 ein Abheben des Kraftbeaufschlagungselements 54 von dem als Drehpunkt wirkenden Drahtring 68 verhindert. Zusätzlich ist das Gehäuseteil 28 gemäß dieser Ausführungsform in seinem, dem radial äußeren Bereich 64 des Kraftbeaufschlagungselements 54 nahen Bereich, d.h. im Übergangsbereich von dem sich im Wesentlichen axial erstreckenden Abschnitt 30 zu dem sich nach radial innen erstreckenden ringartigen Abschnitt 34, mit einem als Abstützelement dienenden erhöhten Bereich 110 versehen, durch welchen das Kraftbeaufschlagungselement 54 in seiner Einbaulage gehalten wird. Gemäß dieser Ausführungsform liegt also das Kraftbeaufschlagungselement 54 mit seinem radial äußeren Bereich 64 an dem erhöhten Bereich 110 an und wird mittels des Distanzbolzens 106 und des Drahtrings 108 in Richtung auf den Gehäuseabschnitt 34 zu gedrückt, wodurch die Vorspannung erzeugt wird.

Es sei darauf hingewiesen, dass die vorangehend beschriebene Vorspannung der Kraftbeaufschlagungselemente in der Form einer Membranfeder und die Maßnahmen zur Verhinderung des Abhebens der Kraftbeaufschlagungselemente 54, 86 von ihren jeweiligen Drehpunkten selbstverständlich auch bei einer Einzelkupplung eingesetzt werden können. Des Weiteren kann die erfindungsgemäße Ausgestaltung auch bei Reibungskupplungen verwendet werden, welche ein zusätzliches, an dem jeweiligen Kraftbeaufschlagungselement angreifendes Gegenkrafterzeugungselement beispielsweise in Form einer zwischen dem sich nach radial innen greifenden ringartigen Abschnitt 34 des Gehäuseteils 28 und dem jeweiligen Kraftbeaufschlagungselement 54 bzw. 86 vorgesehenen (nicht dargestellten) Gegenkraflerzeugungselement, beispielsweise in Form einer Zusatzfeder, aufweisen.

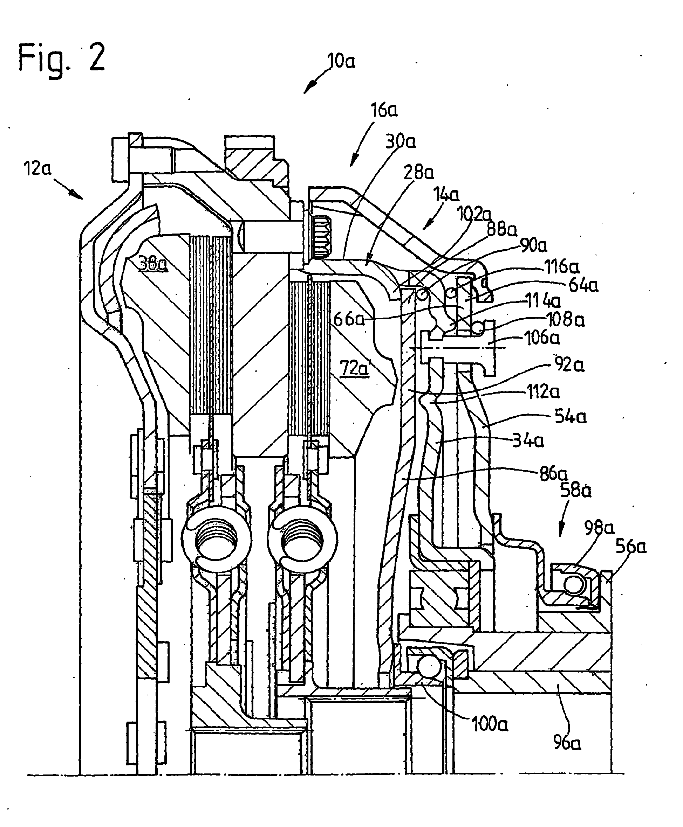

Eine Abwandlung der in Fig. 1 beschriebenen Reibungskupplungsanordnung ist in Fig. 2 dargestellt, wobei Bauelemente, die solchen der ersten Ausführungsform entsprechen, mit den gleichen Bezugszeichen, jeweils vermehrt um den Buchstaben "a", versehen sind. Es wird im Folgenden nur auf die Unterschiede eingegangen, so dass im übrigen auf die Beschreibung des ersten Ausführungsbeispiels verwiesen sei.

Diese zweite Ausführungsform unterscheidet sich gegenüber der Ausführungsform der Fig. 1 im Wesentlichen dadurch, dass die Fixierung des radial äußeren Bereichs 88a des Kraftbeaufschlagungselements 86a des zweiten Kupplungsbereichs 14a in beiden axialen Richtungen lediglich durch den als Drehpunkt dienenden Drahtring 90a und eine Lasche 102a erfolgt, welche an dem sich im Wesentlichen axial erstreckenden Abschnitt 30a des Gehäuseteils 28a ausgebildet ist, unter Weglassung des Drahtrings 104. Weiterhin weist in dieser Ausführungsform der radial nach innen greifende ringartige Abschnitt 34a des Gehäuseteils 28 im Bereich der Anpressplatte 72a eine in Richtung zur Anpressplatte 72a hin vorstehende Sicke 112a auf, durch welche das Kraftbeaufschlagungselement 86a in Einbaulage gehalten bzw. vorgespannt wird.

Als Drehpunkt für das Kraftbeaufschlagungselement 54a des ersten Kupplungsbereichs 12a dient gemäß dieser Ausführungsform eine Sicke 114a, welche den Drahtring 68 der ersten Ausführungsform ersetzt, was eine axial kürzere Bauweise ermöglicht. Darüber hinaus weist die Gehäuseanordnung 28a in dieser Ausführungsform in ihrem Übergangsbereich von dem sich im Wesentlichen axial erstreckenden Abschnitt 30a zu dem sich nach radial innen erstreckenden ringartigen Abschnitt 34a keinen erhöhten Bereich 110 auf, wie in der ersten Ausführungsform, sondern einen Drahtring 116a, welcher das Kraftbeaufschlagungselement 54a in der Einbaulage hält. Wie schon in der ersten Ausführungsform ist auch in diese Ausführungsform einen Distanzbolzen 106a vorgesehen, welcher mittels eines Drahtrings 108a das Kraftbeaufschlagungselement 54a in Richtung auf ihren Drehpunkt zu (die Sicke 114a) vorspannt bzw. hält. -

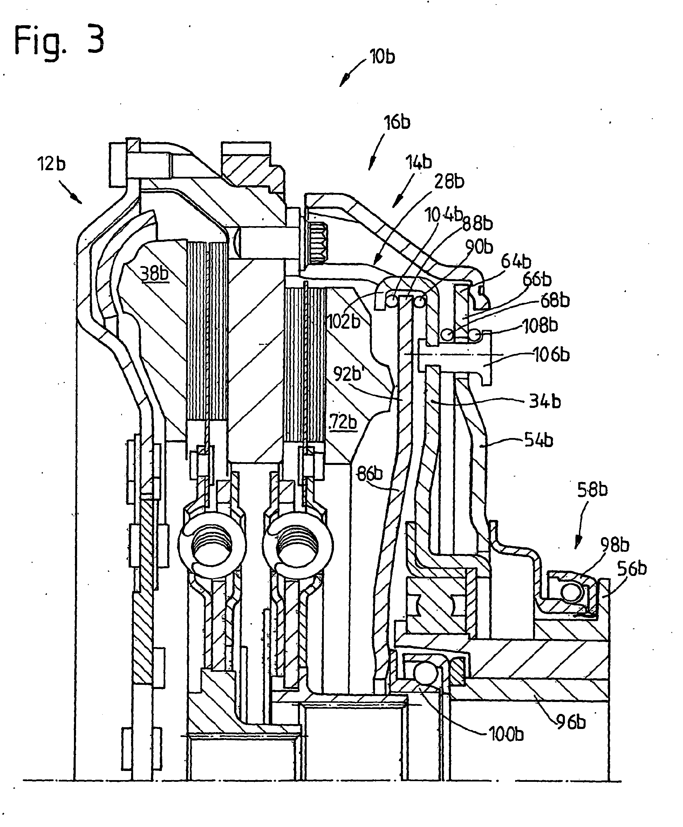

Fig. 3 zeigt eine weitere Abwandlung der in Fig. 1 beschriebenen Kupplungsanordnung, wobei Bauelemente, die solchen der ersten Ausführungsform entsprechen, mit entsprechenden Bezugszeichen, jeweils vermehrt um den Buchstaben "b" versehen sind. Es wird im Folgenden nur auf die Unterschiede eingegangen, so dass im übrigen auf die Beschreibung des ersten Ausführungsbeispiels verwiesen sei.

Bei der in Fig. 3 dargestellten Ausführungsform wird die Vorspannung der Kraftbeaufschlagungselemente 54b, 86b der linken und rechten Kupplungsbereiche 12b, 14b nicht durch die Anlage des jeweiligen Kraftbeaufschlagungselements 54b, 86b an Bereichen des Gehäuseteils 28b erreicht, sondern die Kraftbeaufschlagungselemente 54b, 86b werden durch den Betätigungsmechanismus 58b, insbesondere die Einrücklager 98b, 100b und die Betätigungselemente 56b, 96b, in der Einbaulage gehalten, wodurch diese Ausführungsform auch ohne eine Abstützung des radial äußeren Bereichs 64b des Kraftbeaufschlagungselements 54b am Gehäuseteil 28b, d.h. am erhöhten Bereich 110 in Fig. 1 bzw. dem Drahtring 90a in Fig. 2, auskommt.

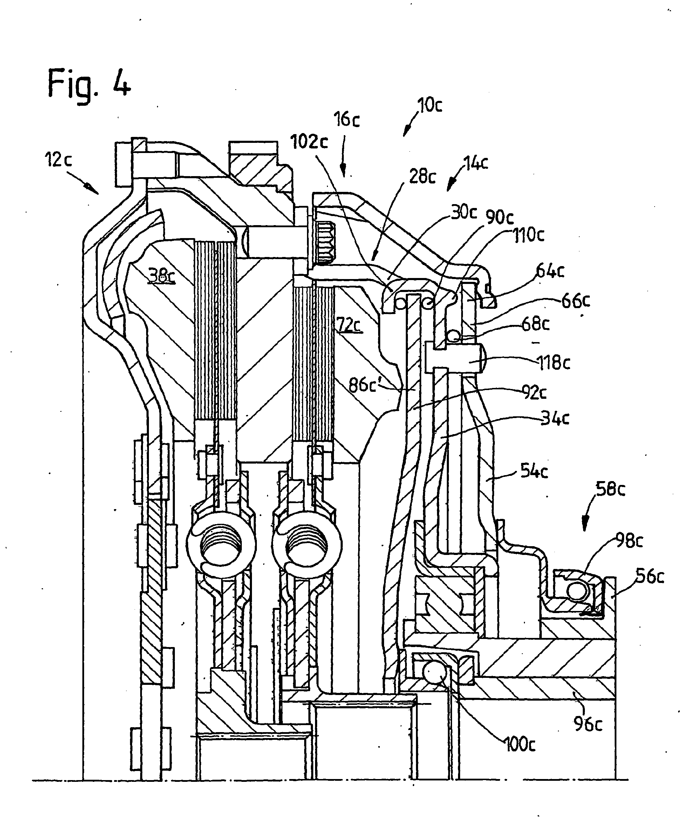

Eine weitere Abwandlung der in Fig. 1 beschriebenen Kupplungsanordnung ist in Fig. 4 dargestellt, wobei Bauelemente, die solchen der ersten Ausführungsform entsprechen, mit den gleichen Bezugszeichen, jeweils vermehrt um den Buchstaben "c", versehen sind. Es wird im Folgenden auf die Unterschiede eingegangen, so dass im übrigen auf die Beschreibung der ersten Ausführungsform verwiesen sei.

Bei dieser Ausführungsform werden die Kraftbeaufschlagungselemente 54c, 86c wie schon bei der Ausführungsform gemäß Fig. 3 durch die Einrücklager 98c, 100c des Betätigungsmechanismus 58c in Einbaulage gehalten. Da das Kraftbeaufschlagungselement 54c bei ausreichender Vorspannung durch das Einrücklager 98c des Betätigungsmechanismus 58c nicht vom Drahtring 68c abheben kann, entfällt bei dieser Ausführungsform sowohl der Drahtring 108 als auch der Distanzbolzen 106, welcher durch einen Führungsbolzen 118c ersetzt ist, der lediglich der Zentrierung des Drahtrings 68c und des Kraftbeaufschlagungselements 54c dient. Durch den erhöhten Bereich 110c im Übergangsbereich von dem sich im Wesentlichen axial erstreckenden Abschnitt 30c des Gehäuseteils 28c zu dem sich im Wesentlichen nach radial innen greifenden ringartigen Abschnitt 34c wird sichergestellt, dass sich das Kraftbeaufschlagungselement 54c mit seinem radial äußeren Randbereich 64c nicht zu weit in Richtung des (nicht dargestellten) Motors bewegt.

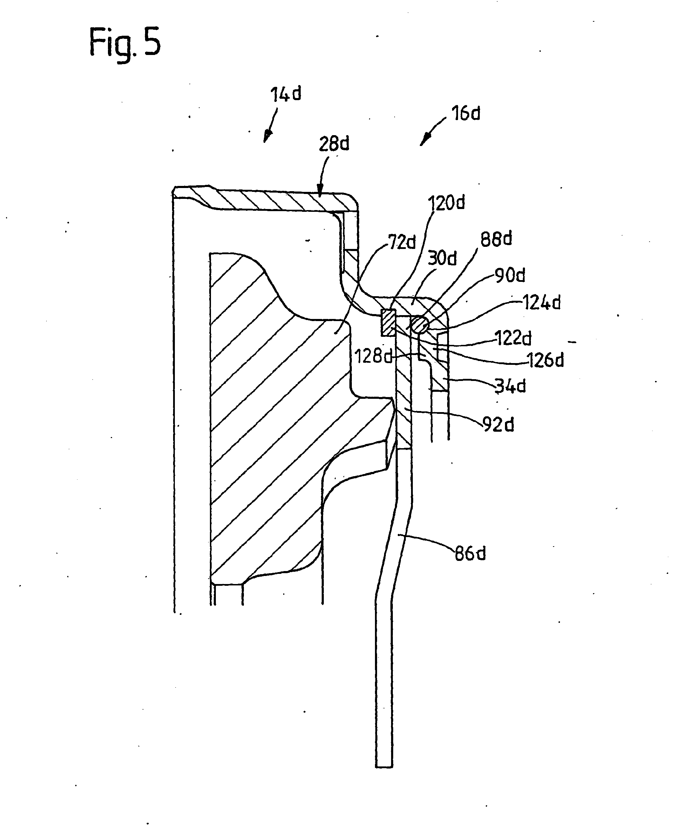

Fig. 5 zeigt eine weitere Ausführungsform der Kupplungsanordnung, wobei Bauelemente, die solchen der ersten Ausführungsform entsprechen, mit den gleichen Bezugszahlen, jeweils vermehrt um den Buchstaben "d" versehen sind. Es wird im Folgenden nur auf die Unterschiede eingegangen, so dass im übrigen auf die Beschreibung des ersten Ausführungsbeispiels verwiesen sei.

Diese Ausführungsform unterscheidet sich gegenüber der ersten Ausführungsform im Wesentlichen dadurch, dass anstelle der Lasche 102 und des Drahtrings 104 zur Abstützung des radial äußeren Bereichs 88 des Kraftbeaufschlagungselements 86 des zweiten Kupplungsbereichs 14 gegenüber dem Drahtring 90 (siehe Fig. 1) lediglich ein Spannring 122d vorgesehen ist, welcher in eine am Innenumfang des sich im Wesentlichen axial erstreckenden Abschnitts 30d ausgebildete Nut 120d eingesetzt ist, um ein Abheben des Kraftbeaufschlagungselements 86d von dem als Drehpunkt für das Kraftbeaufschlagungselement 86d dienenden Drahtring 90d zu verhindern, welcher in einer weiteren Nut 124d aufgenommenen ist.

Wie man der Figur 5 entnehmen kann, wird die Nut 124d bei dieser Ausgestaltungsform dadurch ausgebildet, dass ein Bereich 126d des radial nach innen greifenden ringartigen Abschnitts 34d von der Außenseite her (von rechts) eingestanzt ist, was eine entsprechende Auswölbung 128d an der Innenseite erzeugt, durch welche die Nut 124d ohne spanabhebende Bearbeitung ausgebildet werden kann. Es soll jedoch darauf hingewiesen werden, dass auch spanabhebende und sonstige denkbare Verfahren zur Ausbildung der Nut 124d wie auch der Nut 120d verwendbar sind.

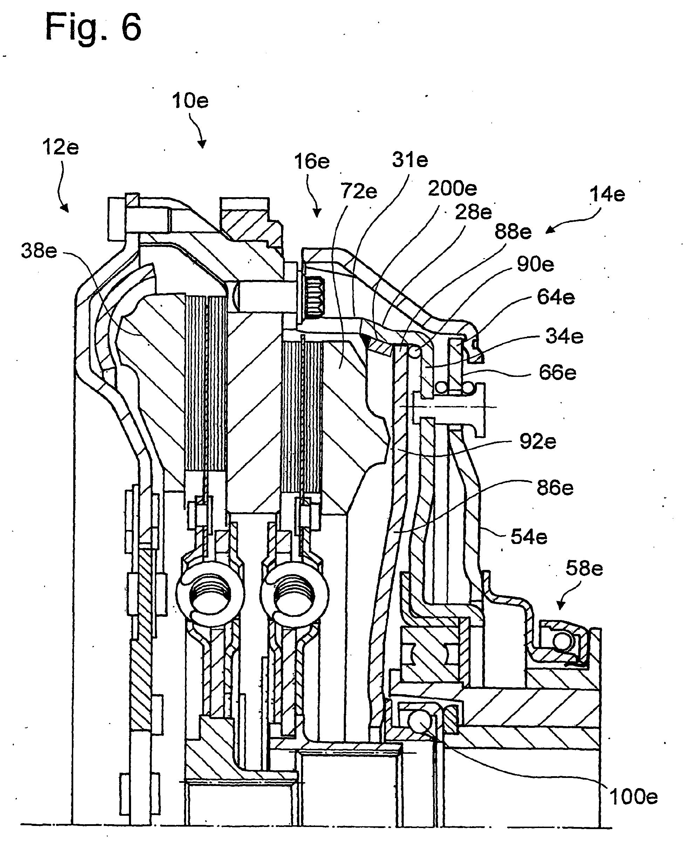

Eine weitere Ausgestaltungsform, die im Wesentlichen eine Abwandlung, der vorangehend mit Bezug auf die Fig. 3 beschriebenen Variante darstellt, wird nachfolgend mit Bezug auf die Fig. 6 - 9 beschrieben. Bauteile, welche vorangehend bereits beschriebenen Bauteilen hinsichtlich Aufbau bzw. Funktion entsprechen, sind mit den gleichen Bezugszeichen unter Hinzufügung eines Anhangs "e" bezeichnet. Es sei darauf hingewiesen, dass mit Bezug auf diese und weitere noch nachfolgend beschriebene Ausgestaltungssvarianten im Wesentlichen nur auf die zu vorangehenden Varianten vorhandenen Unterschiede eingegangen wird, die primär im Bereich der axialen Abstützung des Kraftbeaufschlagungselements 86e in seinem radial äußeren Bereich gerichtet sind. Alle anderen Aspekte können so realisiert sein, wie in den verschiedenen vorangehend beschriebenen Ausgestaltungsformen gezeigt.

Man erkennt in Fig. 6, dass das Kraftbeaufschlagungselement 86e, beispielsweise als Membranfeder ausgebildet, in seinem radial äußeren Bereich 88e in einer ersten axialen Richtung, also in einer Richtung auf das Gehäuseteil 28e zu bzw. in dieses hinein, wieder über den als erstes Abstützelement hier wirkenden Drahtring 90e abgestützt ist, nämlich an dem Bodenbereich 34e des im Wesentlichen topfartig ausgestalteten Gehäuseteils 28e. Zur Abstützung in der anderen axialen Richtung, also in Richtung auf die Anpressplatte 72e zu, ist ein Abstützring 200e vorgesehen. Dieser liegt an der Innenseite des Umfangsbereichs 31e des Gehäuseteils 28e an bzw. wird dort nach dem Einlegen des Drahtrings 90e und des Kraftbeaufschlagungselements 86e eingesetzt und, wie in Fig. 6 angedeutet, beispielsweise durch Verschweißung festgelegt. Da bei diesem Einbau das Kraftbeaufschlagungselement 86e vorgespannt und in seiner beabsichtigten Einbaulage gehalten wird, wird ein spielfreier Einbau erlangt.

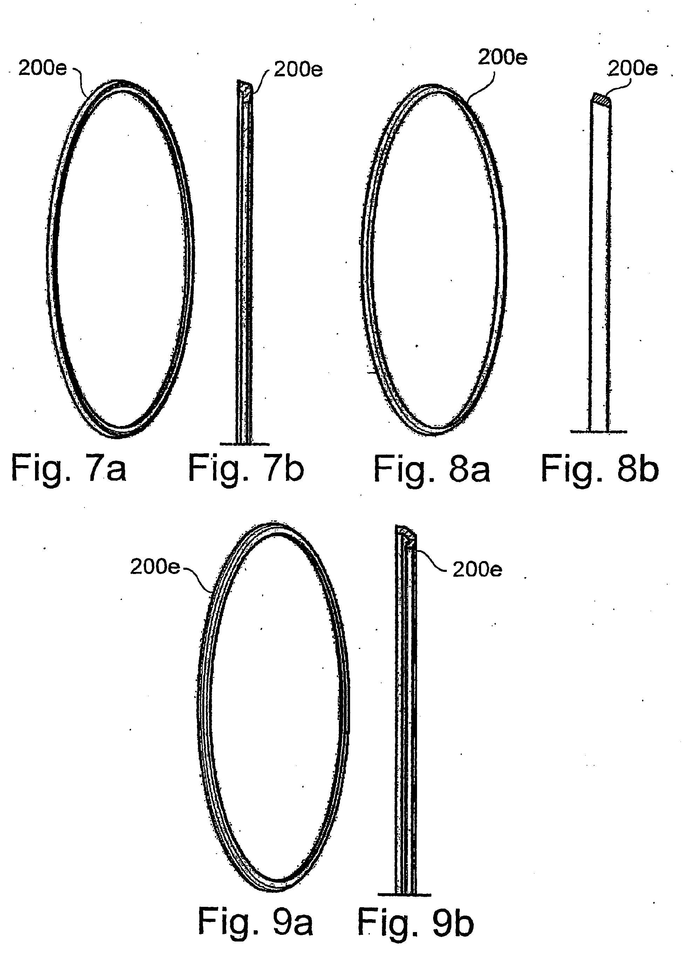

In den Fig. 7 - 9 sind verschiedene Varianten eines derartigen Abstützrings 200e jeweils in Perspektive und im Schnitt gezeigt. Die Formgebung dieses Abstützrings 200e kann selbstverständlich an die Formgebung des Gehäuseteils 28e angepasst sein und ebenso auch an die Formgebung bzw. die Bemessung des Kraftbeaufschlagungselements 86e. Der Abstützring 200e kann beispielsweise durch Tiefziehen, Walzen, Schweißen und Kalibrieren, oder durch Drehen hergestellt werden.

Das Widerlager im radial weiter innen gelegenen Bereich bildet auch bei dieser Ausgestaltungsvariante beispielsweise wieder das Einrücklager 100e des Betätigungsmechanismus 58e, an welchem die radial innen liegenden Endbereiche des Kraftbeaufschlagungselements 86e unter Vorspannung anliegen können, da ein axiales Ausweichen im radial äußeren Bereich 88e nicht möglich ist.

Ein wichtiger Gesichtspunkt der Konstruktionen gemäß Fig. 1 bis 9 ist gewissermaßen eine "axiale Fesselung" der dem jeweiligen Kupplungsbereich zugeordneten Membranfeder bzw. des dem jeweiligen Kupplungsbereich zugeordneten Hebelrings, um diese/diesen erfindungsgemäß vorzuspannen.

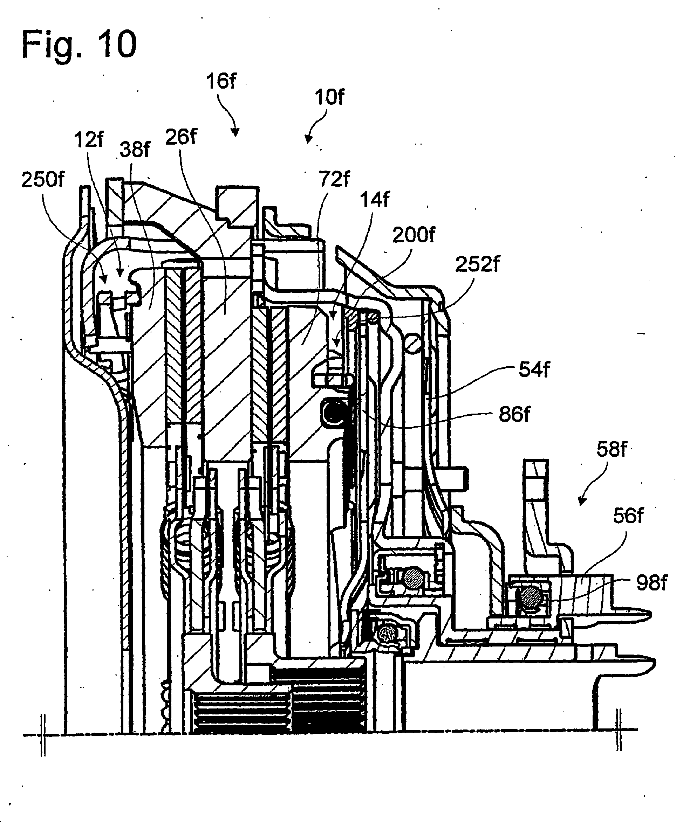

Fig. 10 zeigt ein weiteres entsprechenden Ausführungsbeispiel, bei dem die axiale Fesselung des Kraftbeaufschlagungselements 86f durch einen etwas anders gestalteten Abstützring 200f erreicht ist. Für das Kraftbeaufschlagungselement 54f wird die Vorspannung wie bei den Ausführungsformen gemäß Fig. 3 und Fig. 6 erreicht, nämlich durch den Betätigungsmechanismus 58f, insbesondere das Einrücklager 98f und das Betätigungselement 56f, so dass das Kraftbeaufschlagungselement 54f in der die Vorspannung gebenden Einbaulage gehalten ist und auch ohne eine Abstützung des radial äußeren Bereichs des Kraftbeaufschlagungselements 54f die erfindungsgemäße Vorspannung erreicht wird.

Ein wesentlicher Unterschied zu den vorangehend behandelten Ausführungsformen ist, dass die Ausführungsform der Fig. 10 mit einer dem Kupplungsbereich. 12f zugeordneten Verschleißnachstelleinrichtung oder Verschleißausgleichseinrichtung 250f und einer dem Kupplungsbereich 14f zugeordneten Verschleißnachstelleinrichtung oder Verschleißausgleichseinrichtung 252f ausgeführt ist. Es wird hierzu auf die obigen Ausführungen und speziell die DE 199 10 858 A1 verwiesen.

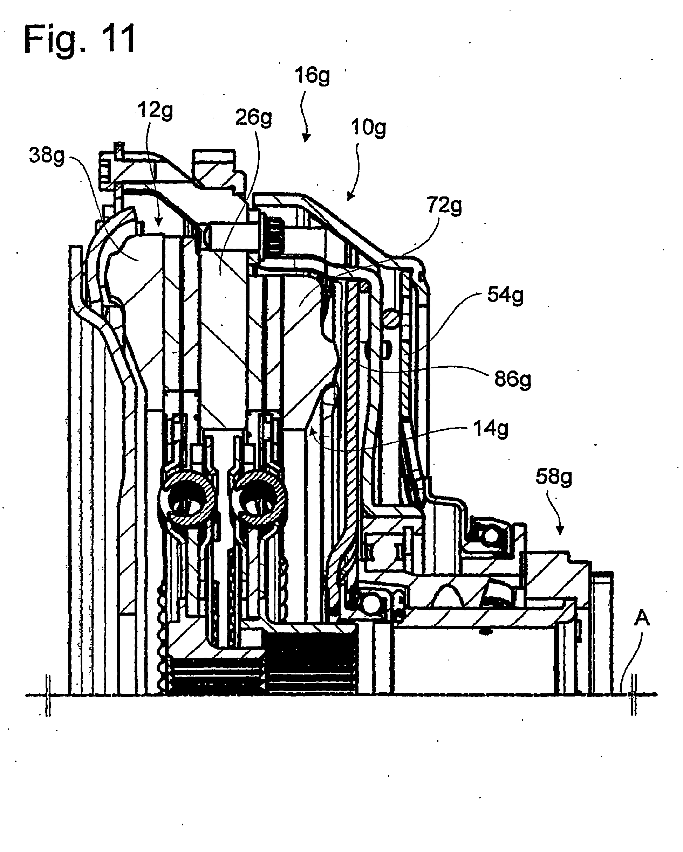

Eine Ausführungsform nach Aspekt A der Erfindung ist in Fig. 11 gezeigt. Der Hebelring 86g, der beispielsweise in der Art einer geschwächten Membranfeder ausgeführt sein kann, ist axial außen nicht gefesselt. Ferner ist der Hebelring 54g, der beispielsweise in der Art einer geschwächten Membranfeder ausgeführt sein kann, in seiner Einbaulage, also in seiner dem vollständig ausgekuppelten Zustand entsprechenden Ruhestellung, nicht vorgespannt. Analog zu der Ausführungsvariante gemäß Fig. 10 könnten Verschleißnachstellvorrichtungen den Kupplungsbereichen 12g und 14g zugeordnet sein.

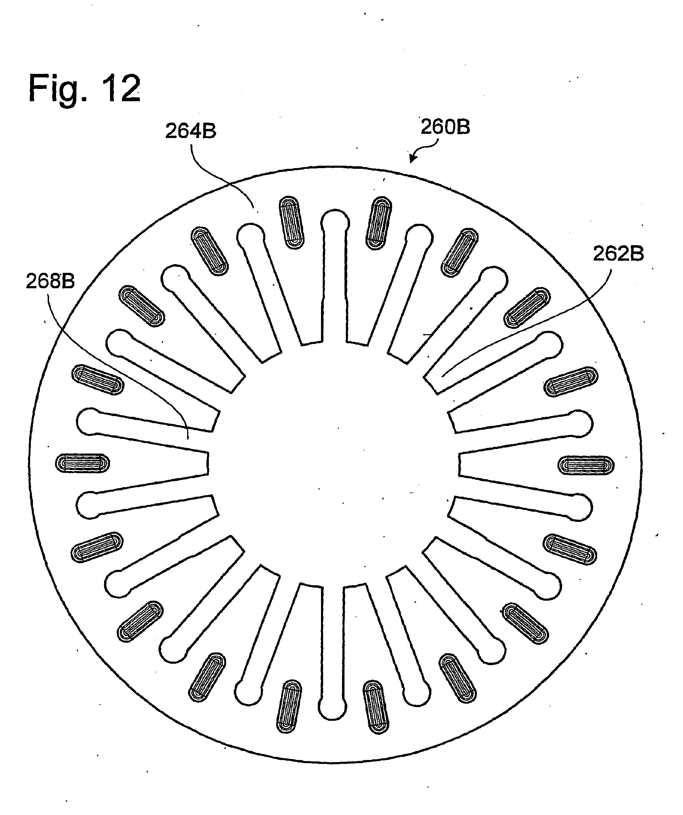

Fig. 12 zeigt ein Beispiel für eine für die Reibungskupplungen nach dem Aspekt B gut geeignete Kraftbeaufschlagungsanordnung, ausgeführt als Membranfeder 160, beispielsweise mit einem Serienhärtewinkel von etwa 12 Grad bis 15 Grad. Die Federzungen 262B sind durch einen durchgehenden, nicht geschwächten Ringabschnitt 264B zusammengehalten, wodurch die übliche S-förmige Federkennlinie erhalten wird.

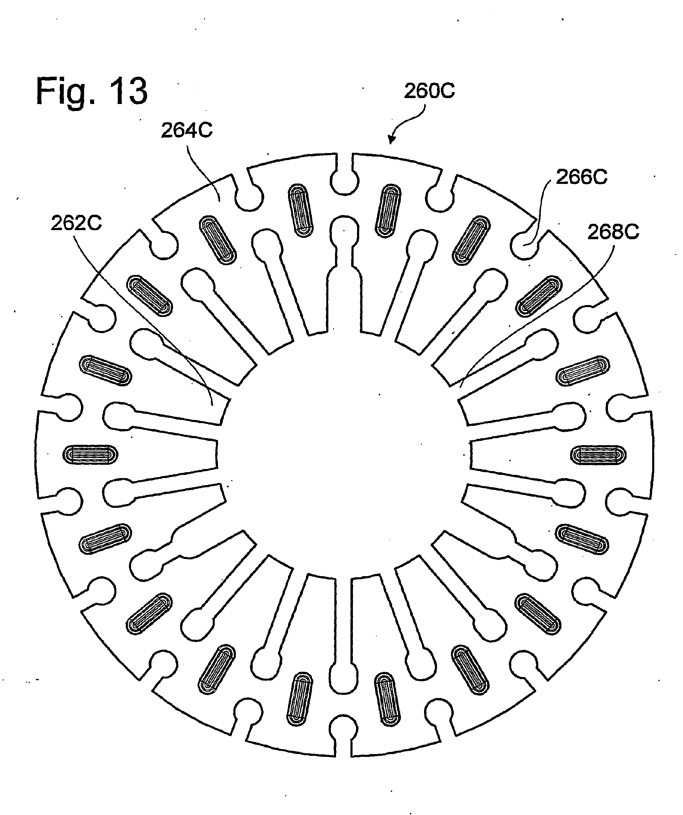

Demgegenüber zeigt Fig. 13 eine für die Reibungskupplungen nach dem Aspekt C vorgesehene Membranfeder 260C. Die Federzungen 262C sind ebenfalls durch einen noch Federkräfte aufbringenden Ringabschnitt 164c zusammengehalten. Dieser Ringabschnitt 164C ist aber durch im Außenumfang vorgesehene Einbuchtungen 266C geschwächt, so dass die S-Kurven-Charakteristik der Membranfeder weniger ausgeprägt und die beim Einrücken entstehenden Reaktionskräfte weniger groß sind. Die Membranfeder 260C kann beispielsweise einen Härtewinkel von nur 5 Grad aufweisen. Diese Härtewinkel liegt deutlich unter bei üblichen Membranfedem vorgesehenen Serienhärtewinkeln.

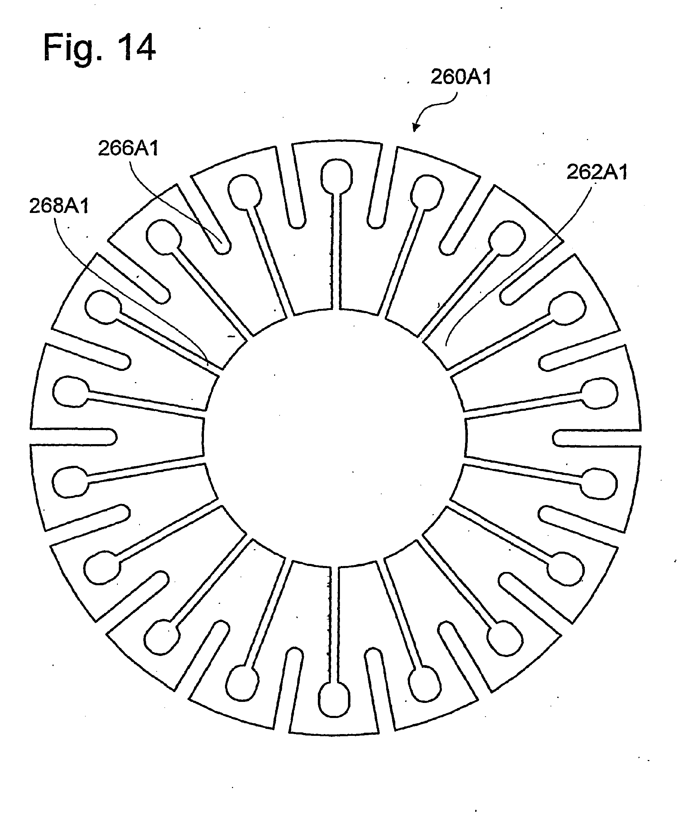

Fig. 14 zeigt einen .für die Reibungskupplungen nach Aspekt A vorgesehenen Hebelring 260A1, dessen Federzungen zwar einteilig zusammenhängen. Es ist aber aufgrund sich mit den Schlitzen 268A1 zwischen den Federzungen überlappenden Schlitzen 266A1 im Außenumfang kein in Umfangsrichtung durchgehender Ringabschnitt mehr vorgesehen, so dass der Hebelring gemäß Fig. 14 kaum noch Membranfeder aufgefasst werden kann. Ein solcher Hebelring liefert tatsächlich eine im Wesentlichen neutrale, genauer lineare Kraft-Weg-Charakteristik, ohne wesentliche Degressivität oder Progressivität.

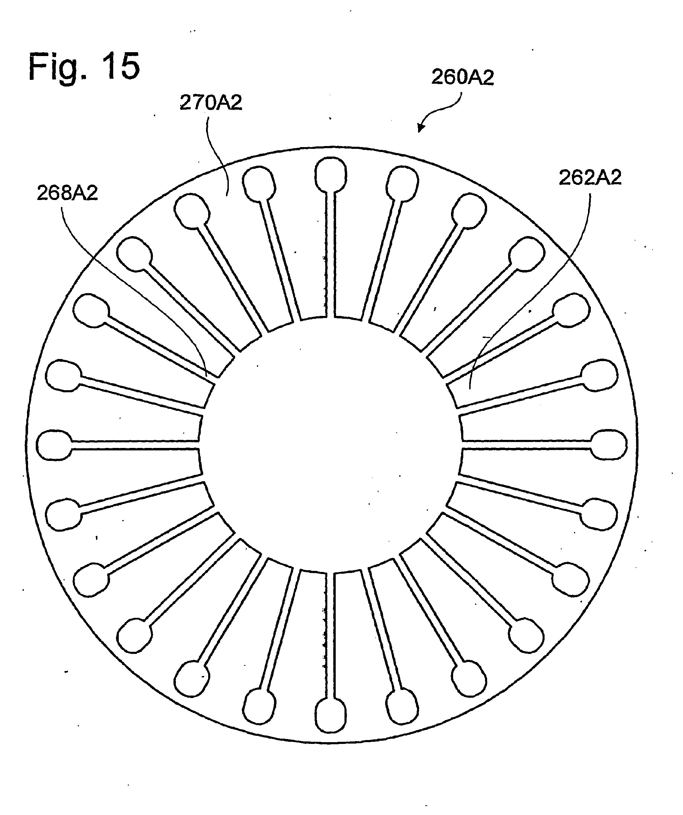

Fig. 15 zeigt ein weiteres Ausführungsbeispiel eines Hebelrings, der für die Reibungskupplung nach Aspekt A vorgesehen ist. Der Hebelring 260A2 liefert eine im Wesentlichen ähnliche Kraft-Weg-Charakteristik wie der Hebelring gemäß Fig. 14, da die Federzungen 262A2 nur durch einen radial sehr schmalen Ringabschnitt 270A2 zusammengehalten werden.

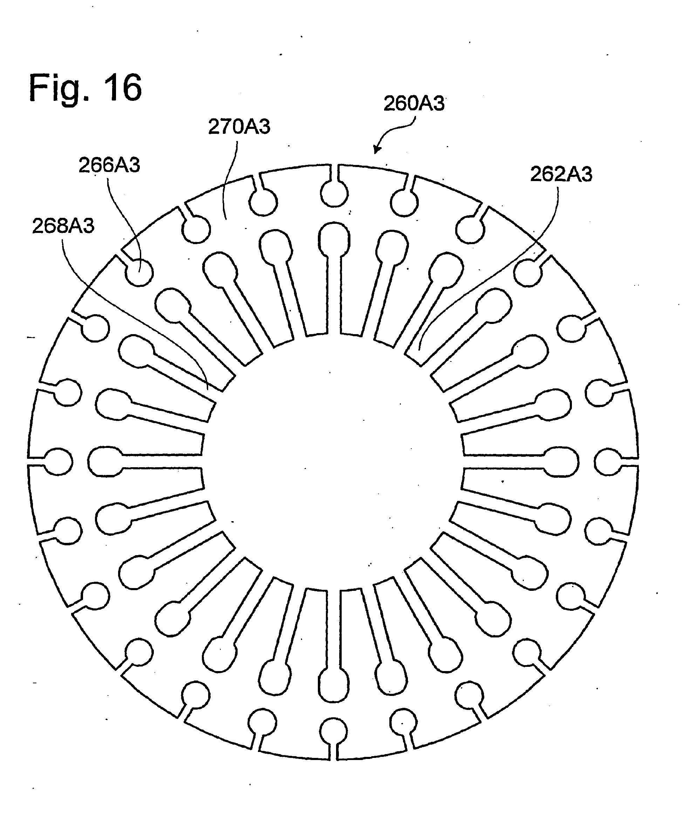

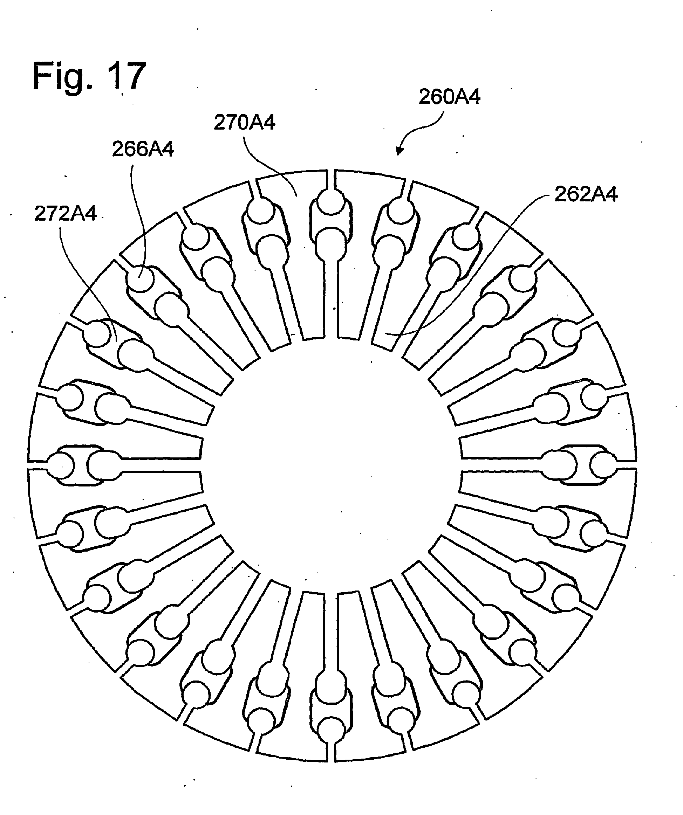

Ein weiteres Beispiel für eine Reibungskupplung nach Aspekt A geeigneten Hebelring 260A3 ist in Fig. 16 gezeigt. Die Federzungen 262A3 sind aufgrund der Schwächungseinbuchtungen 266A3 wiederum nur durch einen sehr schmalen Ringabschnitt 270A3 zusammengehalten, so dass eine Federcharakteristik entsprechend Aspekt A der Erfindung erreicht wird. Gleiches gilt für den Hebelring 260A4 gemäß Fig. 17, der gegenüber dem Hebelring gemäß Fig. 16 noch zusätzlich durch die Materialdicke reduzierende Einprägungen oder Ausfräsungen im Radialbereich des Ringabschnitts 270A4 geschwächt ist.

Bei den für die Reibungskupplung nach Aspekt A vorgesehenen Hebelringen ist vorzugsweise kein wesentlicher Härtewinkel vorgesehen. Die Hebelringe weisen im Ruhezustand vielmehr eine im Wesentlichen plane Gestalt auf.

Betreffend den Aspekt A ist darauf hinzuweisen, dass der Hebelring durchaus auch entgegengesetzt, also ins Negative, vorgespannt sein könnte, mit einer entsprechend diese Vorspannkraft übersteigenden Gegenkraft der Lüftfederanordnung. Ferner kann es zweckmäßig sein, im Einrückersystem eine Vorlastfederanordnung vorzusehen, die die auf das Einrückersystem bzw. an den radial innen liegenden Federzungenenden wirkenden Rückstellkräfte - gewissermaßen erhöht. So kann beispielsweise eine auf die Betätigungselemente 56 und 96 wirkende Rückstellkraft beispielsweise von nahezu 0 N auf beispielsweise ca. 50 bis 100 N angehoben werden.

Allgemein können die Kraftbeaufschlagungselemente beispielsweise, wie vorstehend deutlich gemacht, durch ungeschwächte oder mehr oder weniger geschwächte und hinsichtlich des Härtewinkel geeignet gewählte Membranfedern ausgebildet sein. Es kann jedoch auch beispielsweise eine Kraftübertragungshebelanordnung mit mehreren in Umfangsrichtung verteilt angeordneten Hebelelementen vorgesehen sein, welche nicht zwingend einteilig zusammenhängen müssen. Die Hebelelemente können im Falle der Reibungskupplung nach Aspekt B und Aspekt C selbst in Richtung Auskuppeln ' vorgespannt sein oder es können diesen zugeordnete Vorspannelemente vorgesehen sein, welche die. Hebelelemente in Richtung Auskuppeln vorspannen, um eine der am Beginn eines Einrückvorgangs wirkenden Einrückkraft entgegenwirkende Reaktionskraft bereitzustellen.

Betreffend die Reibungskupplung nach Aspekt B und C sind die verwendeten Kraftbeaufschlagungselemente vorzugsweise so ausgebildet, dass sie lediglich zu Beginn eines Einrückvorgangs eine der wirksamen Einrückkraft entgegenwirkende wesentliche Reaktionskraft bereitstellen, im Übrigen aber im Wesentlichen nur geringe Reaktionskräfte liefern, bevorzugt mit einem neutralen oder degressiven Kraft-Weg-Verhalten, um zwar das Startniveau der Einrückkraft anzuheben, jedoch nicht oder nur unwesentlich den Maximalwert der Einrückkraft, so dass Betätigungsmechanismus (vgl. etwa Betätigungsmechanismus 58) nicht dafür ausgelegt oder umgestaltet sein muss, gegenüber herkömmlichen Ansätzen deutlich höhere Einrückkräfte (maximal erreichbare Einrückkräfte) zu liefern.

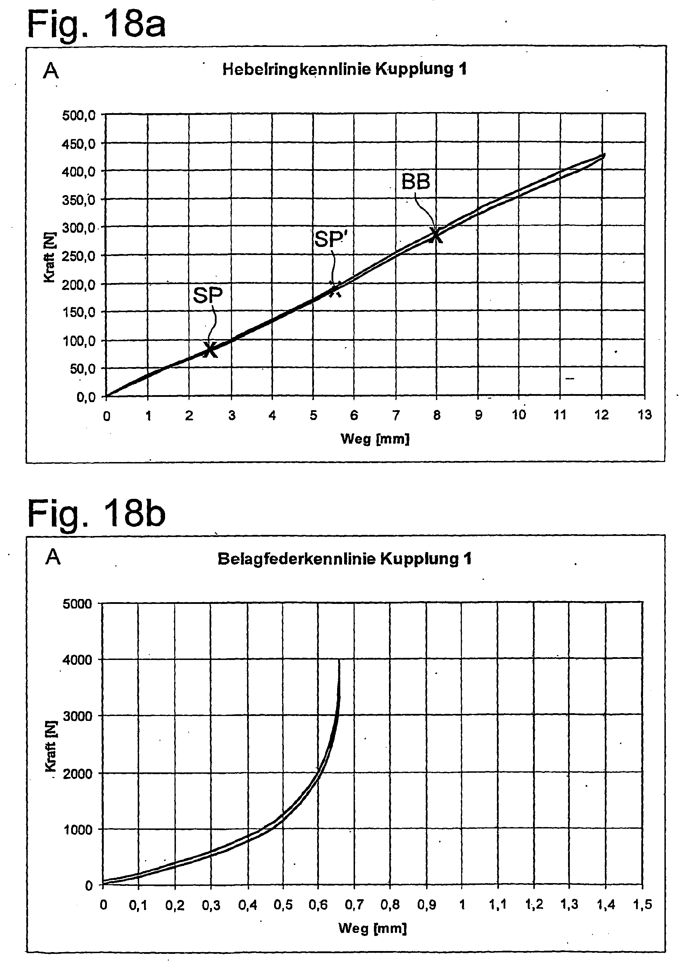

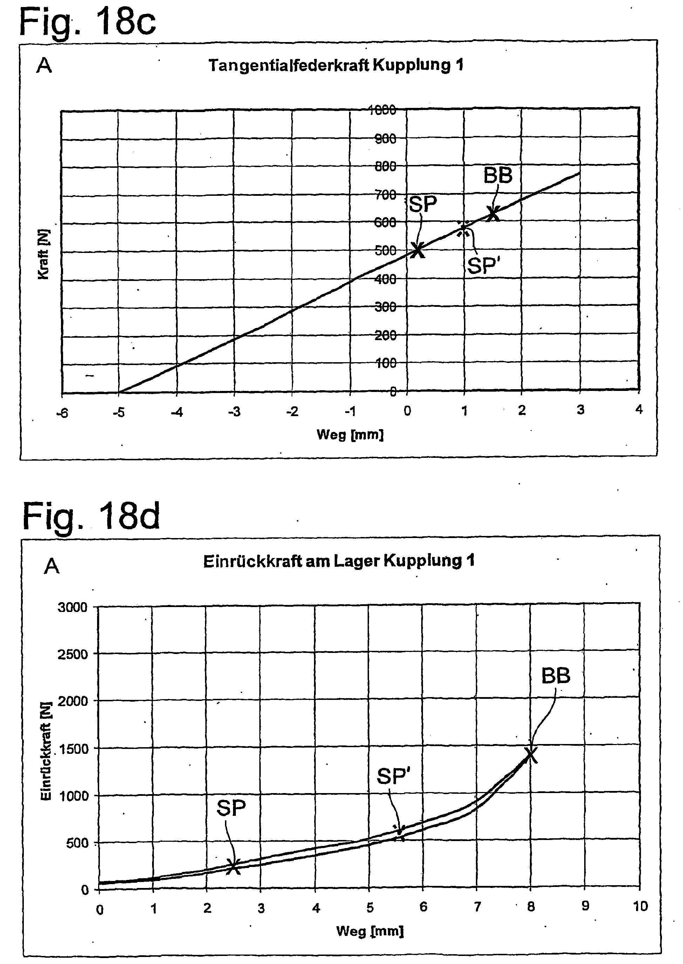

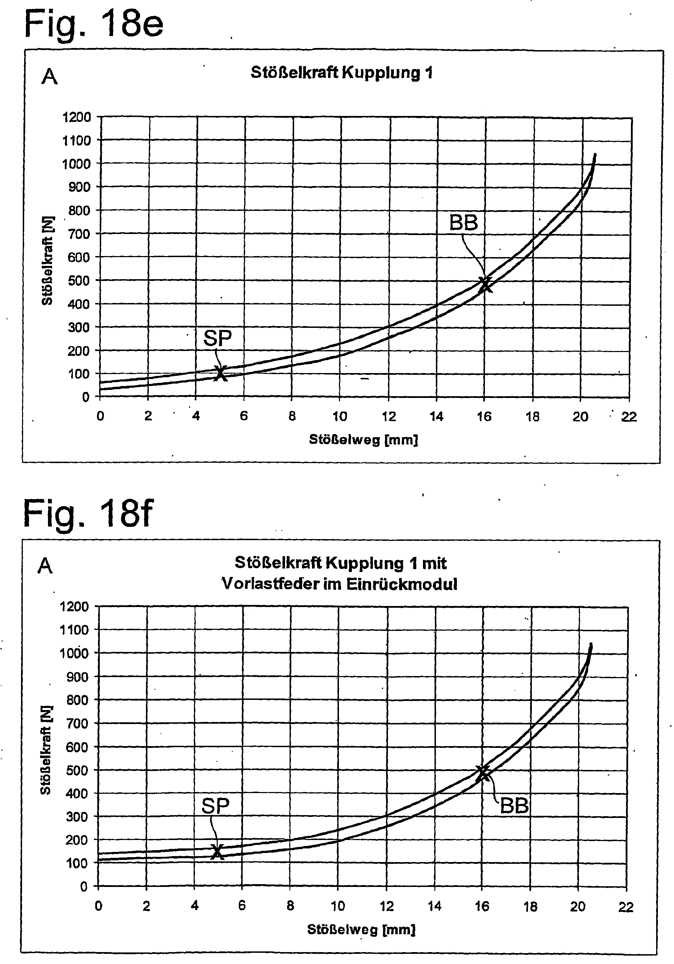

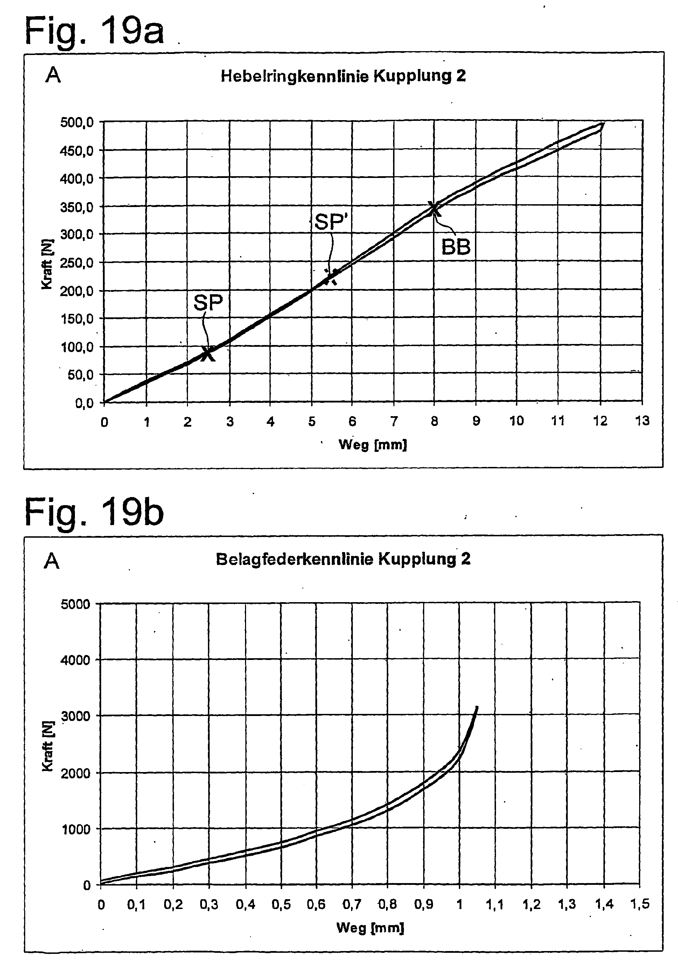

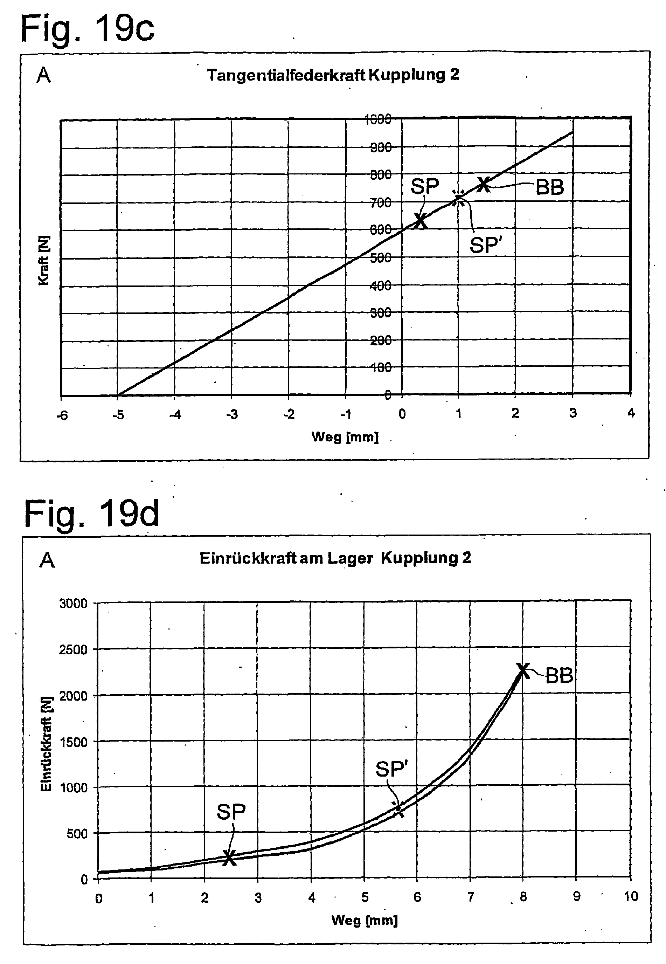

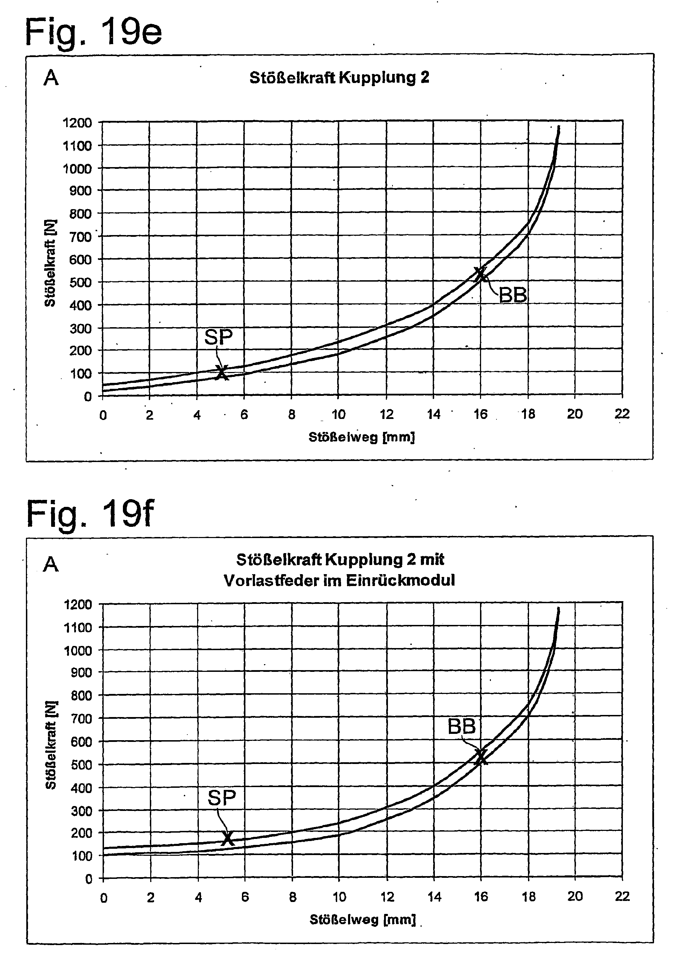

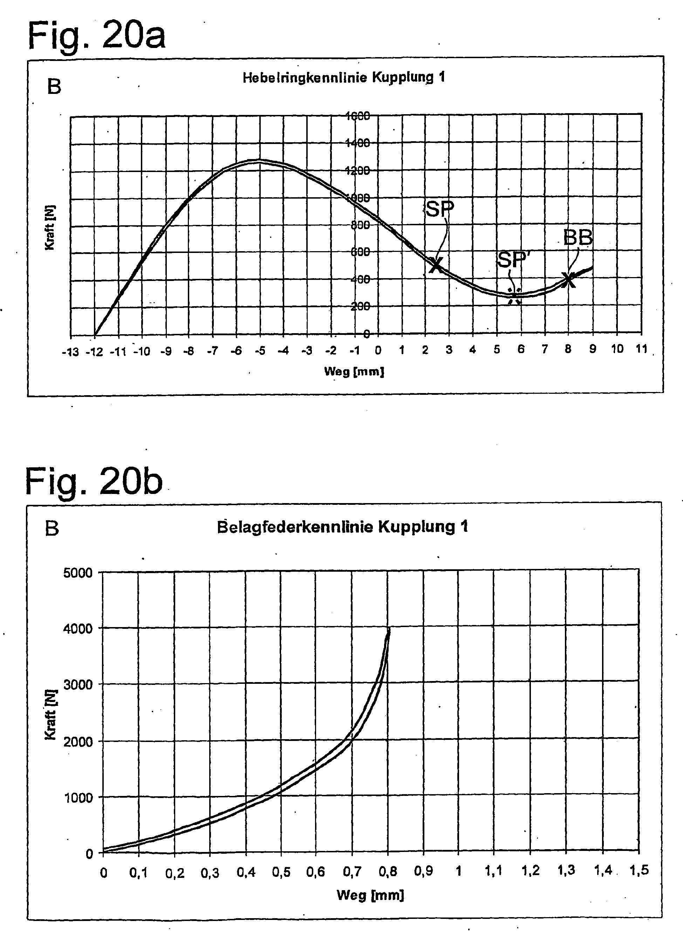

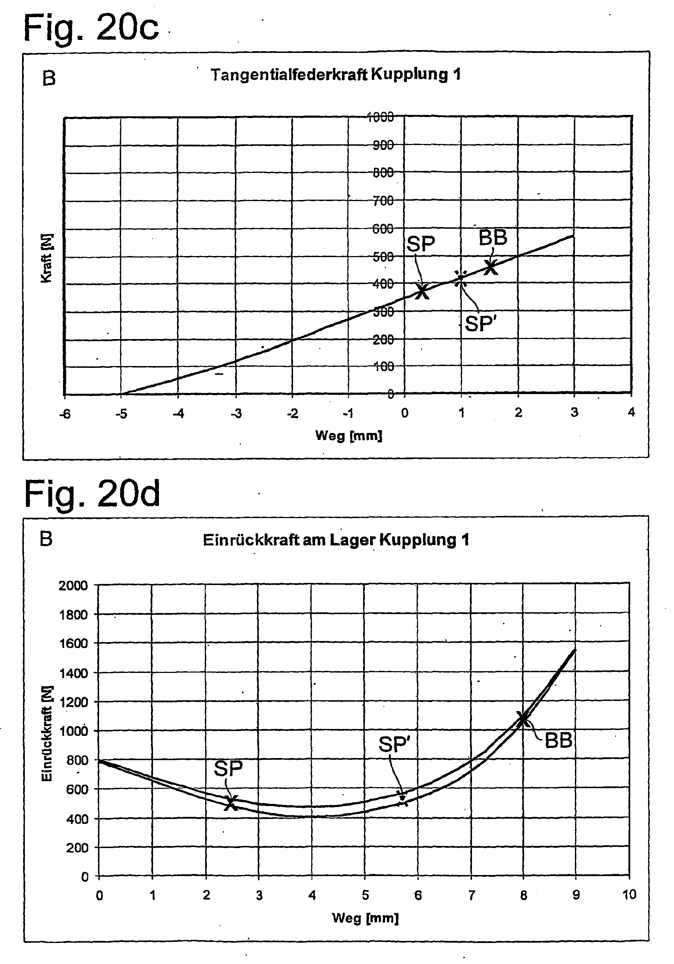

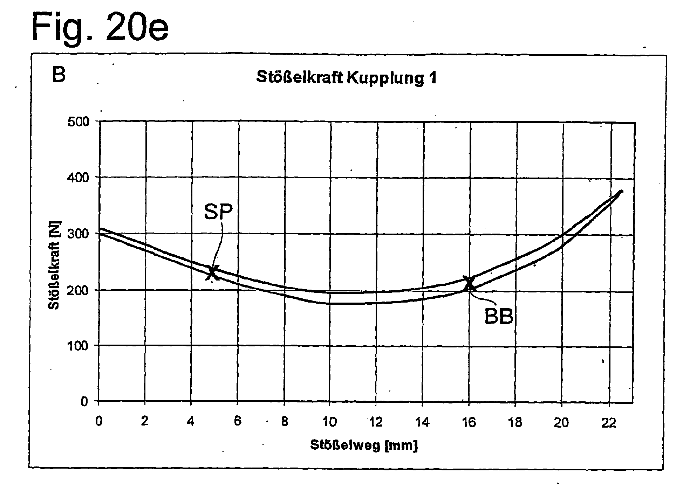

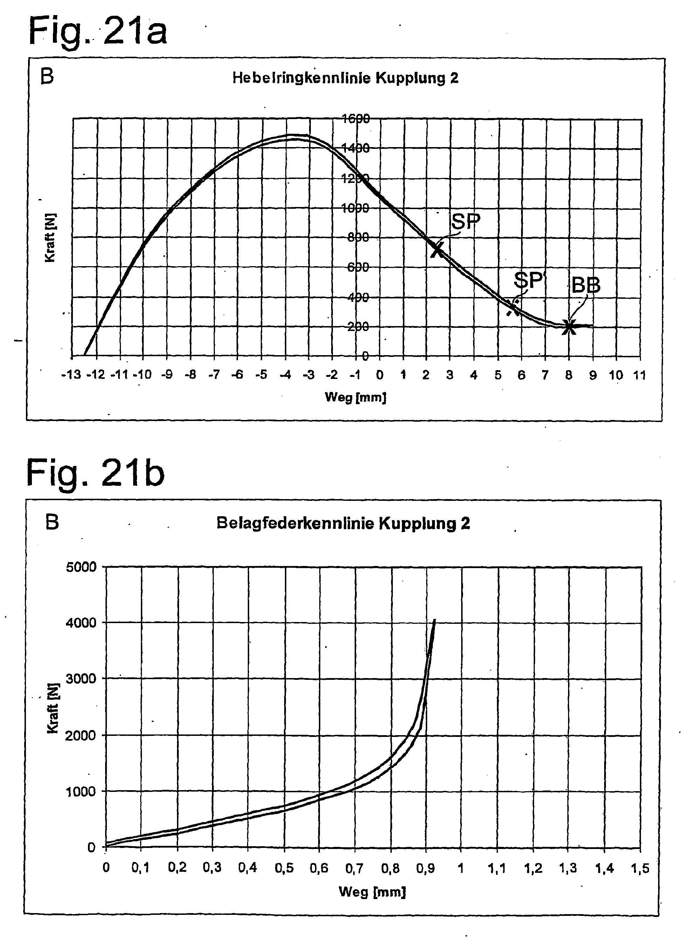

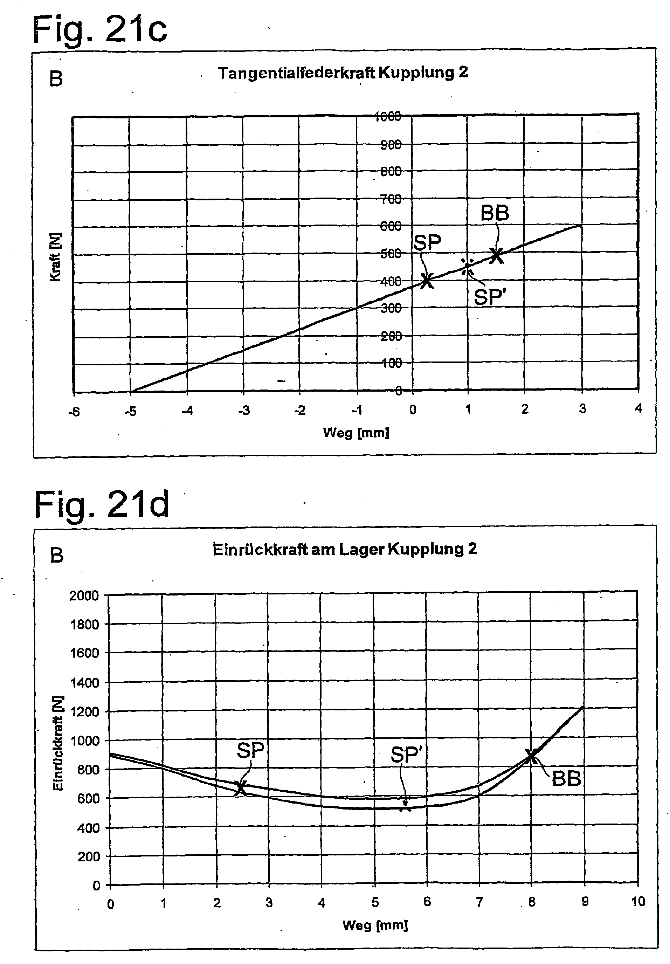

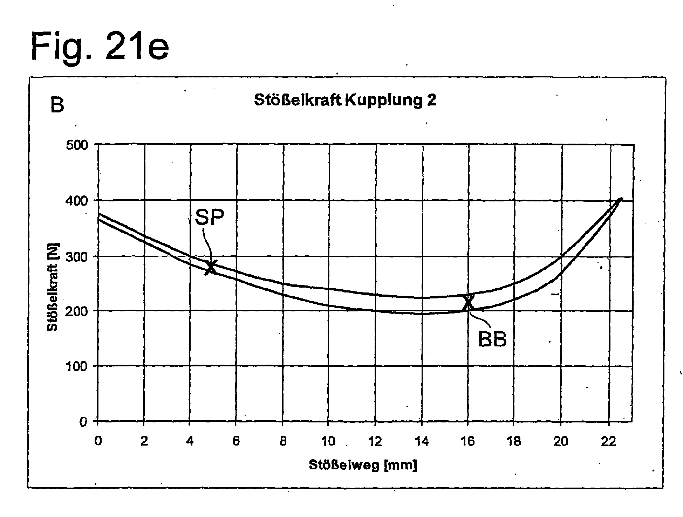

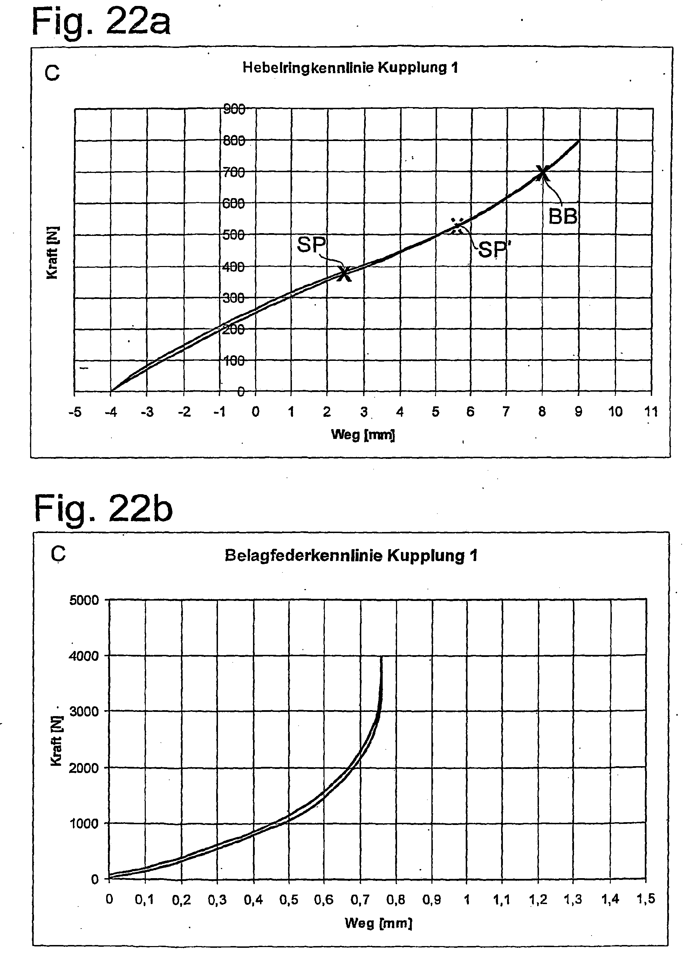

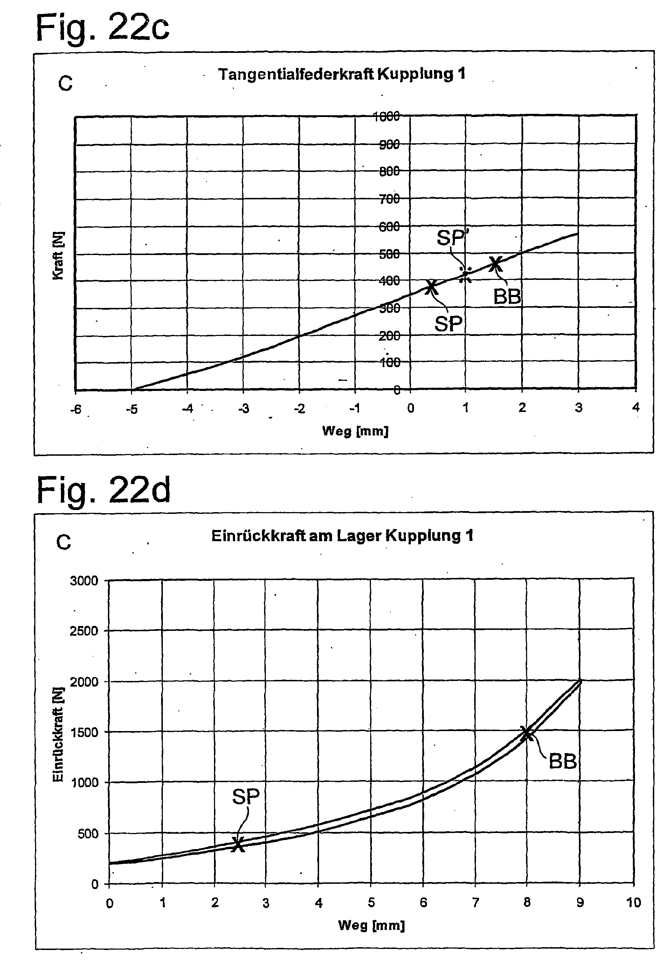

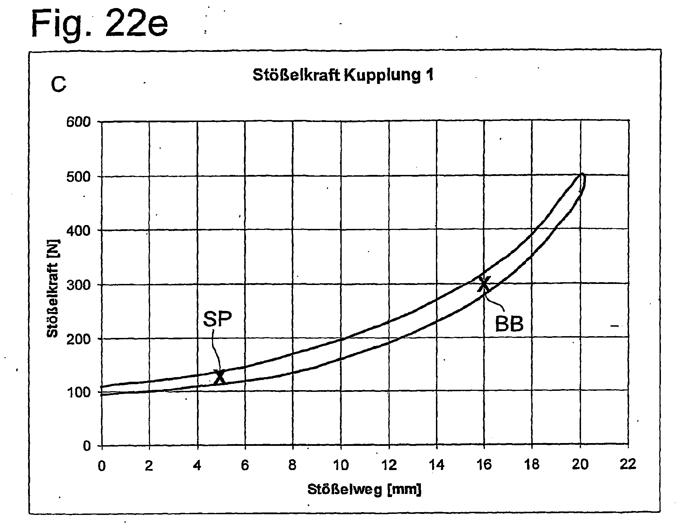

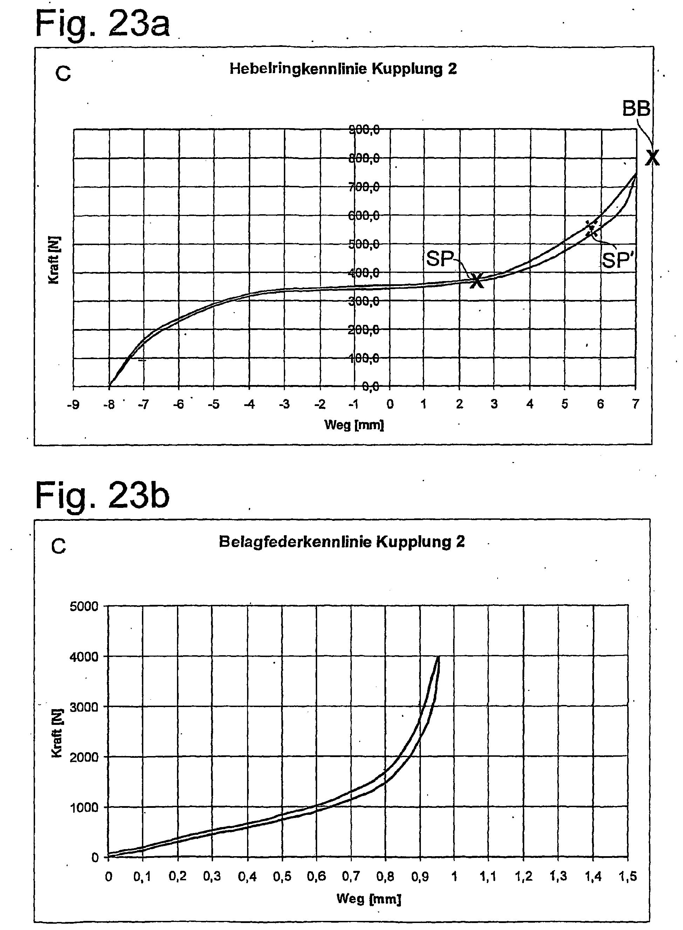

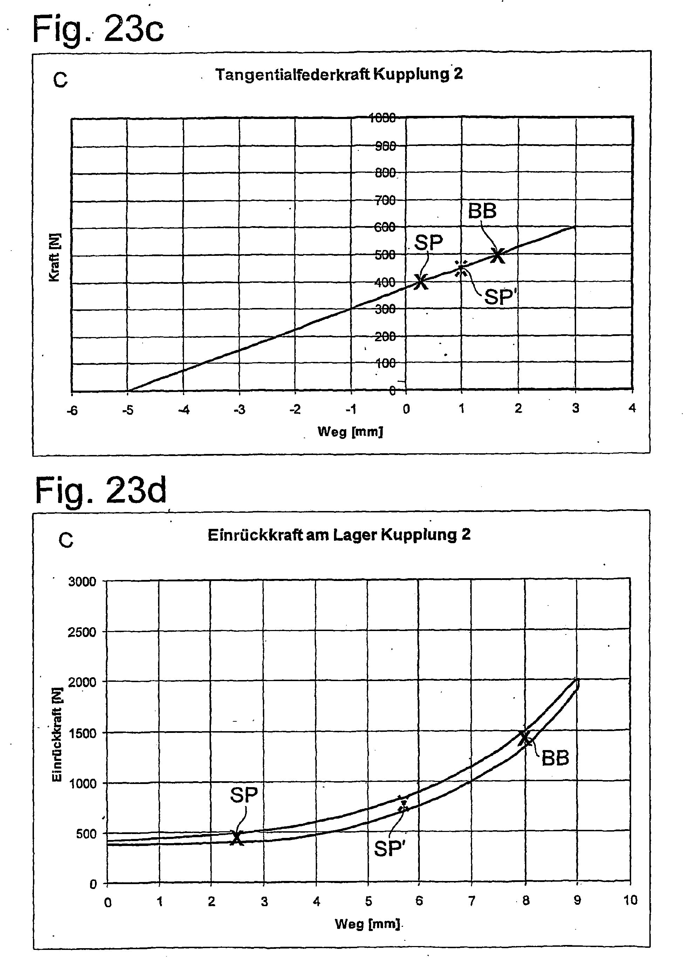

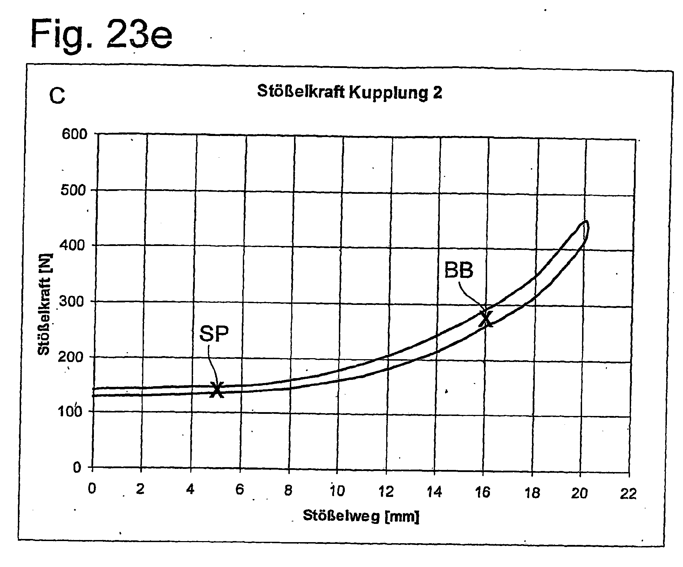

Im Folgenden werden nun beispielhafte konkrete Auslegungen für Doppel-Reibungskupplungen nach den Aspekten A, B und C anhand von Kraft-Weg-Diagrammen erläutert, die in den Fig. 18 bis 23 dargestellt sind. Fig. 18 mit den Teilfiguren 18a) bis 18f gemäß der Erfindung bezieht sich auf eine erste Kupplungsanordnung der Doppelkupplung nach Aspekt gemäß der Erfindung A und Fig. 19 mit den Teifiguren 19a) bis 19f) bezieht sich auf eine zweite Kupplungsanordnung der Doppelkupplung nach Aspekt A, Fig. 20 mit den Teilfiguren 20a) bis 20e) bezieht sich auf eine erste Kupplungsanordnung der Doppelkupplung nach Aspekt B und Fig. 21 mit den Teilfiguren 21a) bis 21e) bezieht sich auf eine zweite Kupplungsanordnung der Doppelkupplung nach Aspekt B, Fig. 22 mit den Teifiguren 22a) bis 22e) bezieht sich auf eine erste Kupplungsanordnung der Doppelkupplung nach Aspekt C und Fig. 23 mit den Teilfiguren 23a) bis 23e) bezieht sich auf eine zweite Kupplungsanordnung der Doppelkupplung nach Aspekt C. Unterschiede in den Kennlinienverläufen zwischen der ersten Kupplungsanordnung (Kupplung 1) und der zweiten Kupplungsanordnung (Kupplung 2) sind durch unterschiedliche Konstruktionen und hieraus bedingten unterschiedliche Bauteilweichheiten begründet. Die Teilfiguren a) zeigen jeweils eine Kennlinie des Hebelrings bzw.. der Membranfeder, nämlich die über den Einrückweg vom Hebelring bzw. Membranfeder, ausgeübte Reaktionskraft. Die Teilfiguren d) zeigen die resultierende Einrückkraft am Einrücklager entsprechend etwa dem Lager 98 bzw. 100 gemäß Fig. 1 als Funktion des Einrückwegs, wobei der Einrückweg gemäß Teilfigur d) dem Einrückweg gemäß Teilfigur a) entspricht. Die Einrückkraft am Einrücklager setzt sich additiv zusammen aus der Reaktionskraft des Hebelrings bzw. der Membranfeder, der von der als Tangentialblattfederanordnung ausgeführten Lüftfederanordnung ausgeübten Gegenkraft, für die die Kennlinie in Teilfigur c) gezeigt ist, nach Erreichen des Schließpunkts SP zusätzlich der Gegenkraft der Reibbelagfederung, deren Kennlinie in Teifigur b) gezeigt ist sowie ggf. zusätzlicher Gegenkraftkomponenten aufgrund von Bauteilelastizitäten. Die Kennlinien sind jeweils am betreffenden Bauteil ohne Normierung des jeweiligen Einrückwegs gemessen, so dass nur die Wege gemäß Teifiguren a) und d) einander entsprechen.

Die Einrücklager werden durch eine einen Betätigungsstößel aufweisende Betätigungsmechanik betätigt. Die Teilfiguren e) zeigen eine Kraft-Weg-Kurve; die die am Stößel ausgeübte Kraft über den Stößelweg angibt, wobei etwa eine Übersetzung von zwei zwischen dem Einrückweg des Einrücklagers (Weg gemäß Teilfigur d)) bzw. des Einrückwegs des Hebelrings bzw. der Membranfeder (Einrückweg gemäß Teilfigur a)) einerseits und dem Stößelweg gemäß Teilfigur e) andererseits gilt. Die Teilfiguren f) für die Auslegung gemäß Aspekt A gemäß der Erfindung beziehen sich auf die Ausgestaltungsmöglichkeit, dass das Einrückmodul mit einer die Gegenkräfte erhöhenden Vorlastfeder ausgeführt ist.

Um die Kurven und verschiedenen Wege ineinander in Beziehung setzen zu können, wurden der Schließpunkt SP und der Punkt BB maximaler Kompression der Reibbelagfederung (Reibbelagfederung auf Block), beides im Zustand ohne Reibbelagverschleiß, in die Diagramme eingezeichnet sowie für den Fall von Reibbelagverschleiß ohne Verschleißausgleich den aus Reibbelagverschleiß resultierenden Schließpunkt SP', wobei angenommen wurde, dass maximaler Reibbelagverschleiß bei noch funktionsfähiger Kupplungsanordnung erreicht ist. Weg O entspricht jeweils dem Ruhezustand, d. h. dem maximal ausgekuppelten Zustand mit minimaler oder keiner Federspannung.

Bezogen auf die jeweilige einzelne Ausführung nach Aspekt A, Aspekt B und nach Aspekt C sind die Einzelfederkennlinien im Hinblick auf die Erzielung einer ähnlichen Stößelkraftkennlinie zwischen Kupplung 1 und Kupplung 2 bzw. im Hinblick auf eine ähnliche Momentenübertragungsfähigkeit über den Betätigungsweg des Stößels ausgelegt.

Gemäß Ausführungsform nach Aspekt A sind die Hebelringe nicht gefesselt bzw. nicht vorgespannt, und die Gegenlast bzw. Vorlast kommt alleine aus den Tangentialblattfedern. Diese Auslegung ist für eine Kraftregelung des Systems gut geeignet. Durch die Zusatzfeder im Einrückmodul kann die Vorlast auf die Stößel erhöht werden, ohne dabei die Einrücklagerbefastung am Hebelring zu erhöhen. Ideal ist eine nahezu exakt oder zumindest näherungsweise lineare Hebelringkennlinie, wie in Fig. 18a) und Fig. 19a) gezeigt. Es ist in Bezug auf die Hebelringkennlinie also eine im Wesentlichen neutrale, sogar eine im Wesentlichen lineare Kraft-Weg-Charakteristik erreicht. Verallgemeinert kann nach Aspekt A zweckmäßig eine stetig steigende Einrückkraftkennlinie vorgesehen sein.

Da in der Offen-Stellung die wirksame Federkraft am Einrücklager im Wesentlichen von der Restfederkraft der Tangentialblattfeder kommt, sollte die Tangentialfederanordnung so ausgelegt sein, dass im Offen-Zustand eine ausreichende Restfederkraft vorhanden ist und beim Schließen nur eine sanfte/leichte Steigerung der Kraft erfolgt. Ideal ist es, eine weiche, weit vorgespannte Federanordnung vorzusehen. Es kommt durchaus aber auch in Betracht, etwa eine Tellerfeder anstelle einer Tangentialblattfederanordnung für den Anpressplatteriabhub vorzusehen, die über den Einrückweg eine zumindest bereichsweise fallende Kennlinie aufweist. Ist die Tangentialblattfederkraft im Offen-Zustand groß genug, so kommt es durchaus auch in Betracht, dass der Hebelring über 0 ins Negative hin vorgespannt ist.

Betreffend die zweckmäßige Ausgestaltung mit einer Vorlastfeder im Einrückmodul ist anzumerken, dass man beispielsweise eine Erhöhung der Stößelrückstellkraft von nahezu 0 N auf ca. 50 bis 100 N vorsehen kann.

Gemäß der Ausführungsform nach Aspekt B übt die Membranfeder bzw. der Hebelring im Offen-Zustand oder Ruhezustand (jeweils Weg 0) aufgrund der Fesselung bzw. Vorspannung der Membranfeder bzw. des Hebelrings eine merkliche Gegenkraft auf das Ausrücklager aus, nämlich eine Kraftsumme aus einer Restfederkraft der Tangentialblattfedern und der Reaktionskraft des Hebelrings bzw. der Membranfeder. Die Hebelringe bzw. Membranfedem sind also vorgespannt eingebaut in Richung Kupplung offen, woraus sich mit dem montierten Einrückmodul in der Einbaulage die erläuterte Vorlast ergibt. Die Tangentialblattfederkraft dient primär nur noch zum "normalen" Abheben der Apressplatte von der jeweiligen Kupplungsscheibe.

Die im Ruhezustand oder Offen-Zustand gelieferte merkliche Gegenkraft gewährleistet auch bei tiefen Temperaturen bzw. ungünstigen Reibungsverhältnissen im Betätigungssystem ein sicheres Öffnen der jeweiligen Kupplung. Der Hebelring -bzw. die Membranfeder drückt dabei über die Betätigungsmechanik beispielsweise einen Nehmerkolben eines hydraulischen Aktuators zurück und sorgt für ein dynamisches Öffnen des Systems. Am Nehmerzylinder kann aufgrund einer Übersetzung gegenüber dem Einrücklager beispielsweise eine Gegenkraft im Ruhezustand von 300 bis 400 N herrschen. Die Ausführung des Hebelrings in der Art einer Membranfeder bzw. das Vorsehen einer Membranfeder mit in Öffnungsrichtung wirkender Einbaulage bietet die Möglichkeit, aufgrund des bekannten "S-Schlags" der Federkennlinie annähernd gleiche Gegenkräfte an der "Offen-Position" und der "vollständig-geschlossen-Position" vorzusehen. Die starke Degressivität der Membranfederkennlinie ermöglicht nämlich eine Kompensation der über den Einrückweg zunehmenden Gegenkräfte aufgrund der Auslenkung der Lüftfederanordnung und der Kompression bzw. zumindest teilweisen Kompression der Belagfederung.

In Abweichung von Fig. 20a) und 21a) könnte man auch durchaus vorsehen, dass der Schließpunkt SP ohne Reibbelagverschleiß und der Schließpunkt SP' bei maximalem Reibbelagverschleiß auf verschiedenen Seiten des Minimums der Federkraftkennlinie liegen. Auf jeden Fall wird bei der gezeigten Auslegung bzw. der hier angesprochenen alternativen Auslegung erreicht, dass durch Reibbelagverschleiß die Gegenkraft infolge Eigenspannung nicht zunimmt, sondern abnimmt oder im Wesentlichen gleich bleibt. Soweit die Einrückmechanik genügend Einrückweg bereitstellen kann, beeinträchtigt der Reibbelagverschleiß die Momentenübertragungsfähigkeit der Kupplung also nicht.

Eine Auslegung nach Aspekt B ist noch, dass die hohe Rückfederkraft des Hebelrings bzw. der Membranfeder sowie auch zusätzlich der Belagfederkraft am Schließpunkt der Kupplung ein dynamisches Öffnen der Kupplung sichert. Es wirken die Hebelrückkraft und die Lüftfederkraft als Summe miteinander, wobei deren Kennlinienverlauf gegenläufig ist, so dass die Einrückkraft am Lager (vgl. Fig. 20d) und Fig. 21d) sich nur geringfügig ändert und im Wesentlichen auch in einem sehr flachen Minimum der Kraft-Weg-Kurve bewegt. Es ist deswegen stets eine ausreichende Rückstellspannung für ein sicheres Öffnen bzw. Offenhalten der Kupplung bzw. entsprechendes Abheben und Imabstandhalten der Anpressplatte vorhanden.

Ein weiterer Vorteil ist, dass wegen der näherungsweise gleichbleibenden Kraft auf die Eingangsseite der Kraftbeaufschlagungsanordnung, hier die Federzungenenden des Hebelrings bzw. der Membranfeder, auch eine im Wesentlichen gleich bleibende Bauteilverbiegung, beispielsweise Zungenverbiegung, gewährleistet ist. Schon im Offen-Zustand liegt die einstellende Zungenbiegung schon weitestgehend vor. Es muss deswegen kein Systemeinrückwegverlust für Zungenbiegung oder allgemein Bauteilverformung vorgehalten werden.

Die Kupplungsauslegung nach Aspekt B ist ohne zusätzlichen Aufwand nur für eine Wegregelung des Systems geeignet, da über die Kraft keine Rückmeldung über die momentane Position entlang dem Einrückweg gegeben werden kann. Ein grundsätzlicher Vorteil gegenüber der Reibungskupplung nach Aspekt A ist, dass die mittlere Rückstellkraft höher als bei der Variante nach Aspekt A liegt, so dass die schon angesprochene hohe bzw. höhere Dynamik beim Öffnen der Kupplung erreicht wird.

Gemäß Ausführung nach Aspekt C ist eine stetig steigende Einrückkraft bzw. Stößelkraft vorgesehen. Im Vergleich zur Ausführungsform nach Aspekt B ist die Fläche unter der Stößelkraft über den Einrückweg kleiner und somit auch die zu leistende Arbeit bzw. benötigte Betätigungsenergie. Vorteilhaft erscheint hier eine Verriegelung des Einrücksystems beim Zustand "Kupplung geschlossen".

Wie in den Kennlinien erkennbar, tritt in der Offen-Stellung (Ruhezustand) eine merkliche Reaktionskraft der entsprechend vorgespannten Membranfeder bzw. des entsprechend vorgespannten Hebelrings oder einer zugehörigen Vorspannfederanordnung auf, was erwünscht ist. Diese Vorlast sollte so hoch wie nötig sein, wie dies etwa im Hinblick auf Funktionssicherheit bei tiefen Temperaturen erforderlich ist, aber so gering wie möglich sein, um nur geringere Betätigungskräfte zu benötigen bzw. das Einrücklager weniger zu belasten. Das stetige Ansteigen mit einer vorzugsweise eindeutigen Zuordnung zwischen Weg einerseits und Kraft andererseits erlaubt eine sehr gute Steuerung/Regelung der Einkuppelkraft, da jeder Kraft exakt ein Wegpunkt zugeordnet ist.

Der Anstieg der Reaktionskraft ist durch entsprechende Auslegung der Membranfeder bzw. des Hebelrings wählbar, wobei die Federkraft der Lüftfederanordnung mitzuberücksichtigen ist. Die am Einrücklager wirkende Gegenkraft der Lüftfederanordnung steigt geringer als die hier wirkende Reaktionskraft der Kraftbeaufschlagungsanordnung an, da die Lüftfederkraft durch die Kraftbeaufschlagungsanordnung (Membranfeder bzw. Hebelring) untersetzt wird.

Im Falle von Reibbelagverschleiß steigt die Reaktionskraft des Hebelrings noch weiter sanft an, sofern kein Verschleißausgleich vorgesehen ist. Bestimmender Kraftanteil der Einkuppelkraft am Einrücklager bleibt die Anpresskraft auf die Reibbeläge, trotz Belagverschleiß. Die Betätigungsmechanik kann deswegen in der Regel problemlos zusätzliche Kraftbeiträge zum Erreichen der erforderlichen Anpresskraft bei zunehmendem Reibbelagverschleiß liefern.

Es ist noch zu allen den Verlauf der Gesamtkraft über den Weg zeichnenden Diagrammen (Fig. d), e) und f)) Folgendes anzumerken. Die Angabe des verlagerten Schließpunkts SP' infolge von maximalem Reibbelagverschleiß in der dargestellten Kurve stellt eine starke Vereinfachung dar, da der Beitrag der Belagfederung zur Gesamtkraft erst am Schließpunkt einsetzt. Tatsächlich ändert sich die resultierende Kraft-Weg-Kennlinie im Zuge des Reibbelagverschleißes in der Weise, dass die Kraft am alten, aufgrund von Reibbelagverschleiß nicht mehr gültigen Schließpunkt geringer wird, die Kurve also unter die Neuzustandskurve abfällt, und dass dann ab resultierendem neuen Schließpunkt aufgrund der einsetzenden Gegenkraft der Belagfederung stärker ansteigt. Im Falle der Auslegung nach Aspekt A und Aspekt C bedeutet dies, dass die resultierende Kraftkurve bei Reibbelagverschleiß dann bei einer insgesamt höheren Endkraft am Punkt BB maximaler Belagfederungskompression endet, wobei dieser Punkt BB entsprechend dem Abstand zwischen dem alten Schließpunkt SP und dem neuen Schließpunkt SP' sich entsprechend zu dem Endpunkt eines verlängerten Einrückwegs verlagert hat. Der Hebelring bzw. die Membranfeder ist dementsprechend weiter ausgelenkt und liefert aufgrund der im Fall A und im Fall C mit der Auslenkung ansteigenden Reaktionskraft am Punkt BB einen entsprechend größeren maximalen Kraftbeitrag. Etwas anderes gilt für die Auslegung nach Aspekt B, da hier die Reaktionskraft des Hebelrings bzw. der Membranfeder mit der Auslegung zuerst abfällt und erst nach Durchlaufen eines Minimums wieder ansteigt.

Da bei allen Varianten ein Reibbelagverschleiß im Hinblick auf die bereitstellbare Anpresskraft im Kupplungsbereich nur eine gegenüber herkömmlichen Ansätzen geringe oder, insbesondere im Falle der Auslegung nach Aspekt B und C untergeordnete oder sogar unwichtige Bedeutung hat, kommt es durchaus in Betracht, einen Verschleißwegausgleich nicht in der Reibungskupplung zwischen Kraftbeaufschlagungsanordnung und Anpressplatte vorzusehen, sondern auf Seiten des Betätigungssystems. Man könnte beispielsweise vorsehen, dass der Verschleißwegausgleich auf Grundlage einer entsprechenden Auslegung eines Hydraulikzylinders erfolgt, bei dem der Verschleißweg auf hydraulischem Wege durch Erhöhung des Hydraulikvolumens erfolgt, auf das ein Betätigungskolben wirkt. Es kann beispielsweise ein einen entsprechenden Verschleißwegausgleich ergebendes Hydraulikvolumen in den Betätigungszylinder eingepumpt werden, was im Prinzip bei jeder Betätigung in inkrementalem Ausmaß erfolgen könnte. Im Zuge des Reibbelagverschleißes nimmt das Hydraulikvolumen, auf den der Betätigungskolben wirkt, immer mehr zu. Es ist nicht erforderlich, nach einem Kuppelvorgang, in dem das Hydraulikvolumen zum Verschleißausgleich zugenommen hat, wieder in den dem Neuzustand entsprechenden Offen-Zustand zurückzufahren. Ein derartiger hydraulischer Verschleißwegausgleich erfordert ohne Frage aber auch eine entsprechede Auslegung der gesamten Betätigungsmechanik, speziell auch des hydraulischen Nehmerzylinders und aller weiteren Komponenten bis zur Anpressplatte, so dass diese dann im Zuge des Belagverschleißes und resultierendem Verschleißwegäusgleiches ihre dem ausgekuppelten Zustand entsprechende Ruheposition ändern können und ausgehend von dieser geänderten Ruheposition noch einen vollständigen, nun in Einrückrichtung gewissermaßen versetzten Einrückweg bis zum vollständig eingekuppelten Zustand zurücklegen können.

Es wurde schon angesprochen, dass Unterschiede zwischen den Kennlinien in Bezug auf Kupplung 1 und Kupplung 2 auf unterschiedliche Bauteilweichheiten zurückzuführen sind. Beispielsweise sind bei der über Zuganker zu betätigenden Kupplung 12 gemäß Fig. 1 Weichheiten der zusätzlichen Übertragungshebel und der Zuganker zu berücksichtigen. Diese zusätzliche Weichheit kann durch einen steileren Verlauf der Hebelring-Kraftkurve und Belagfederkurve ausgeglichen werden.

Für eine Reibungskupplung, umfassend eine Gehäuseanordnung, wenigstens eine unter der Wirkung einer zugeordneten Lüftfederanordnung stehende Anpressplatte, welche mit der Gehäuseanordnung zur gemeinsamen Drehung um eine Drehachse und in Richtung der Drehachse bezüglich der Gehäuseanordnung verlagerbar gekoppelt ist, wenigstens ein Einrückersystem zur Erzeugung einer Einrückkraft, und wenigstens eine Kraftbeaufschlagungsanordnung zur Übertragung der Einrückkraft auf die Anpressplatte, um diese gegen die Wirkung der Lüftfederanordnung in Richtung der Drehachse in Einrückrichtung zu bewegen, wird vorgeschlagen, dass eine Vorspannung vorgesehen ist, die eine der am Beginn eines Einrückvorgangs wirkenden Einrückkraft entgegenwirkende Gegenkraft oder Reaktionskraft bereitstellt. Diese Vorspannung kann erfindungsgemäß durch entsprechende Vorspannung der Lüftfederanordnung und durch entsprechende Vorspannung der Kraftbeaufschlagungsanordnung realisiert sein.

## Patentansprüche

1. Reibungskupplung, umfassend eine Gehäuseanordnung (16g), wenigstens eine unter der Wirkung einer zugeordneten Lüftfederanordnung stehende Anpressplatte (38g, 72g), welche mit der Gehäuseanordnung zur gemeinsamen Drehung um eine Drehachse (A) und in Richtung entlang der Drehachse (A) bezüglich der Gehäuseanordnung verlagerbar gekoppelt ist, wenigstens ein Einrückersystem (58g) zur Erzeugung einer Einrückkraft, und wenigstens eine Kraftbeaufschlagungsanordnung (54g, 86g) zur Übertragung der Einrückkraft auf die Anpressplatte, um diese gegen die Wirkung der Lüftfederanordnung in Richtung entlang der Drehachse (A) in Einrückrichtung zu bewegen;
**dadurch gekennzeichnet, dass** die Lüftfederanordnung vorgespannt ist, um eine der am Beginn eines Einrückvorgangs wirkenden Einrückkraft entgegenwirkende Gegenkraft bereitzustellen, und
dass die Kraftbeaufschlagungsanordnung (54g, 86g) zur Vorspannung der Lüftfederanordnung entgegengesetzt vorgespannt ist, so dass sie am Beginn eines Einrückvorgangs, an einer dem Einrückersystem zugeordneten Eingangsseite der Kraftbeaufschlagungsanordnung, gegenüber der durch die Kraftbeaufschlagungsanordnung übertragenen Gegenkraft, beruhend auf der Wirkung der Lüftfederanordnung, selbst keine der Einrückkraft entgegenwirkende Reaktionskraft bereitstellt.

2. Reibungskupplung nach Anspruch 1,
**dadurch gekennzeichnet, dass** das Einrückersystem mit einer Vorspannfederanordnung ausgeführt ist, die eine einer am Beginn eines Einrückvorgangs wirkenden Betätigungskraft eines Krafterzeuger des Einrücksystems entgegenwirkende Gegenkraft bereitstellt, wobei die Einrückkraft die aus der Betätigungskraft und der Gegenkraft resultierende Kraft ist.

3. Reibungskupplung nach Anspruch 1 oder 2,
**gekennzeichnet durch** ein insgesamt leicht progressives oder - vorzugsweise - neutrales Kraft-Weg-Verhalten der Reaktionskraft der Kraftbeaufschlagungsanordnung (54g, 86g).

4. Reibungskupplung nach Anspruch 3,
**gekennzeichnet durch** ein insgesamt neutrales Kraft-Weg-Verhalten der Gegenkraft der Lüftfederanordnung.

5. Reibungskupplung nach einem der Ansprüche 1 bis 4,
**dadurch gekennzeichnet, dass** die der Einrückkraft entgegenwirkende Reaktionskraft von einem Minimum oder einem verschwindenden Kraftwert zu Beginn eines Einrückwegs der Anpressplatte entlang dem Einrückweg in Einrückrichtung kontinuierlich zunimmt, vorzugsweise über den gesamten möglichen Einrückweg.

6. Reibungskupplung nach Anspruch 5,
**dadurch gekennzeichnet, dass** über den Einrückweg zumindest zwischen dem Beginn und einem einem beginnenden Kontakt der Anpressplatte mit wenigstens einer zugeordneten Reibfläche, insbesondere wenigstens einer Reibbelagfläche vorzugsweise einer Kupplungsscheibenanordnung, entsprechenden Schließpunkt (SP) die an der Eingangsseite wirksame Summe aus der Reaktionskraft und einer durch die Kraftbeaufschlagungsanordnung (54g, 86g) übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte bzw. auf die Gegenkraft am Beginn des Einrückwegs.

7. Reibungskupplung nach Anspruch 6,
**dadurch gekennzeichnet, dass** über einen aufgrund von Reibbelagverschleiß verlängerten Einrückweg zumindest zwischen einer Position entsprechend dem Schließpunkt (SP) im Zustand ohne Reibbelagverschleiß und dem aus dem Reibbelagverschleiß folgenden Schließpunkt (SP') die an der Eingangsseite wirksame Summe aus der Reaktionskraft und der durch die Kraftbeaufschlagungsanordnung (54g, 86g) übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte bzw. auf die Gegenkraft am Beginn des Einrückwegs.

8. Reibungskupplung nach Anspruch 7,
**dadurch gekennzeichnet, dass** bezogen auf einen Zustand maximal möglichen Reibbelagverschleißes bei noch bestehender Funktionsfähigkeit der Reibungskupplung über den verlängerten Einrückweg zumindest zwischen einer Position entsprechend dem Schließpunkt (SP) im Zustand ohne Reibbelagverschleiß und dem aus dem Reibbelagverschleiß folgenden Schließpunkt (SP') die an der Eingangsseite wirksame Summe aus der Reaktionskraft und der durch die Kraftbeaufschlagungsanordnung übertragenen Gegenkraft beruhend auf der Wirkung der Lüftfederanordnung in Einrückrichtung zunimmt, vorzugsweise in Einrückrichtung leicht ansteigend bezogen auf die Summe der Kräfte am Beginn des Einrückwegs.

9. Reibungskupplung nach einem der Ansprüche 6 bis 8,
**dadurch gekennzeichnet, dass** die Reibfläche elastisch nachgiebig aufgeführt ist, ggf. durch vorsehen einer Reibbelagfederung, und dass über den Einrückweg ab Schließpunkt (SP) in Einrückrichtung die an der Eingangsseite wirksame Summe aus der Reaktionskraft und der durch die Kraftbeaufschlagungsanordnung (54g, 86g) übertragenen Gegenkraft beruhend auf der Wirkung der Lüftfederanordnung und einer durch die Kraftbeaufschlagungsanordnung übertragenen weiteren Gegenkraft beruhend auf der elastischen Nachgiebigkeit der Reibfläche in Einrückrichtung zunimmt, vorzugsweise in einem sich an den Schließpunkt anschließenden Einrückwegabschnitt in Einrückrichtung leicht ansteigend bezogen auf die Summe der Kräfte am Beginn des Einrückwegs.

10. Reibungskupplung nach einem der Ansprüche 1 bis 9,
**dadurch gekennzeichnet, dass** die Kraftbeaufschlagungsanordnung als geschwächte Membranfeder oder als Hebelringanordnung, vorzugsweise als an einem Umfang einteilig zusammenhängende Hebelringanordnung (260A1; 260A2; 260A3; 260A4), ausgeführt ist, die - wenn ihr eine Härtestellung zuordenbar ist - zu Beginn des Einrückwegs im Wesentlichen entsprechend ihrer Härtestellung in der Reibungskupplung angeordnet ist.

11. Reibungskupplung nach Anspruch 10,
**dadurch gekennzeichnet, dass** die Membranfeder bzw. Hebelringanordnung (260A1; 260A2; 260A3; 260A4) einen an einem Außenumfang vorzugsweise mit Schwächungsausparungen oder Schwächungsschlitzen(266A1; 266A3; 266A4) ausgeführten Ringabschnitt und von diesem nach innen vorstehende Federzungen oder Hebel (262A1; 262A2; 262A3; 262A4) aufweist, wobei innen liegende Federzungenenden oder Hebelenden vorzugsweise die Eingangssseite bilden.

12. Reibungskupplung nach Anspruch 10 oder 11,
**dadurch gekennzeichnet, dass** die Membranfeder bzw. Hebelringanordnung (260A1; 260A2; 260A3; 260A4) einen Härtewinkel von etwa 0 Grad oder keinen Härtewinkel aufweist.

13. Reibungskupplung nach einem der Ansprüche 1 bis 12,
**dadurch gekennzeichnet, dass** die Kraftbeaufschlagungsanordnung, ggf. Membranfeder oder Hebelringanordnung, oder eine die Kraftbeaufschlagungsanordnung vorspannende Vorspann-Federanordnung einer S-förmigen Federkennlinie genügt, wobei dem Einrückweg ein in Einrückrichtung vorzugsweise zumindest näherungsweise linear ansteigender Federkennlinienabschnitt zugeordnet ist, oder dass die Kraftbeaufschlagungsariordnung, ggf. Membranfeder oder Hebelringanordnung (260A1; 260A2; 260A3; 260A4), einer zumindest näherungsweise linear ansteigenden Federkennlinie genügt.

14. Reibungskupplung nach einem der Ansprüche 1 bis 13,
**dadurch gekennzeichnet, dass** die als weiche Federanordnung ausgeführte Lüftfederanordnung weit vorgespannt in der Reibungskupplung eingebaut ist, um einerseits am Beginn eines Einrückens eine hinreichende Gegenkraft bereitzustellen und andererseits nur einen sanften Anstieg der Gegenkraft beim Einrücken vorzusehen.

15. Reibungskupplung nach einem der Ansprüche 1 bis 14,
**dadurch gekennzeichnet, dass** die Lüftfederanordnung einen Steifigkeitswert kleiner gleich etwa 125 N/mm, vorzugsweise kleiner gleich etwa 100 N/mm aufweist.

16. Reibungskupplung nach einem der Ansprüche 1 bis 15,
**dadurch gekennzeichnet, dass** die Lüftfederanordnung einen solchen Steifigkeitswert aufweist und die Gegenkraft der Lüftfederanordnung derart durch die Kraftbeaufschlagungsanordnung (54g, 86g) übertragen wird, dass an der Eingangsseite der Kraftbeaufschlagungsanordnung ein auf die Lüftfederanordnung zurückzuführender Steifigkeitswertanteil kleiner gleich etwa 30 N/mm, vorzugsweise kleiner gleich etwa 25 N/mm auftritt.

17. Reibungskupplung nach einem der Ansprüche 1 bis 16,
**dadurch gekennzeichnet, dass** die Lüftfederanordnung derart vorgespannt ist, dass sie am Beginn eines Einrückvorgangs eine Gegenkraft von wenigstens etwa 400 N, vorzugsweise von wenigstens etwa 500 N liefert.

18. Reibungskupplung nach einem der Ansprüche 1 bis 17,
**dadurch gekennzeichnet, dass** die Lüftfederanordnung derart vorgespannt ist und die Gegenkraft der Lüftfederanordnung derart durch die Kraftbeaufschlagungsanordnung übertragen wird, dass an der Eingangsseite der Kraftbeaufschlagungsanordnung (54g, 86g) eine auf die Lüftfederanordnung zurückzuführende Gegenkraftkomponente von wenigstens etwa 100 N, vorzugsweise von wenigstens etwa 125 N auftritt.

19. Reibungskupplung nach einem der Ansprüche 1 bis 18,
**dadurch gekennzeichnet, dass** die Lüftfederanordnung weich ausgeführt und derart vorgespannt ist, dass über einen Einrückweg vom Schließpunkt bis zu einem Punkt maximaler Einrückung die Gegenkraft der Lüftfederanordnung um einen Kraftwert ansteigt, der maximal einem Drittel, vorzugsweise maximal einem Viertel, höchstvorzugsweise maximal einem Fünftel der am Beginn eines Einrückvorgangs von der Lüftfederanordnung gelieferten Gegenkraft entspricht.

## Claims

1. Friction clutch comprising a housing arrangement (16g), at least one pressure plate (38g, 72g) exposed to the action of an associated pneumatic spring device and connected to the housing arrangement for conjoint rotation about an axis of rotation (A) and so as to be displaceable in the direction along said axis of rotation (A) with respect to said housing arrangement, at least one engaging system (58g) for producing an engaging force and at least one force-exerting arrangement (54g, 86g) for transmitting the engaging force to the pressure plate in such a way that the pressure plate is displaced in the engaging direction in the direction along the axis of rotation (A) and oppositely to the action of the pneumatic spring device;
**characterized in that** the pneumatic spring device is prestressed to produce a counterforce which acts opposite to the engaging force acting at the beginning of the engaging process, and
that the force-exerting arrangement (54g, 86g) is prestressed in the opposite direction to the prestress of the pneumatic spring device, such that, at the beginning of an engaging process, the force-exerting arrangement does not provide, at a force-exerting arrangement input side associated with the engaging system, a reactive force, which opposes the engaging force, with respect to the counterforce itself which is transmitted by the force-exerting arrangement and based on the action of the pneumatic spring arrangement.

2. Friction clutch according to Claim 1,
**characterized in that** the engaging system is implemented with a prestressed spring device which provides a counterforce which acts opposite to an actuating force, acting at the beginning of the engaging process, of an actuator of the engaging system, wherein the engaging force is the force resulting from the actuating force and the counterforce.

3. Friction clutch according to Claim 1 or 2,
**characterized by** an overall slightly progressive or - preferably - neutral force-displacement function of the reactive force of the force-exerting arrangement (54g, 86g) .

4. Friction clutch according to Claim 3,
**characterized by** an overall neutral force-displacement function of the counterforce of the pneumatic spring device.

5. Friction clutch according to any one of Claims 1 to 4,
**characterized in that** the reactive force acting opposite to the engaging force continuously increases from a minimum or an infinitesimal force value at the beginning of an engaging displacement of the pressure plate along the engaging displacement in the engaging direction, preferably over the entire possible engaging displacement.

6. Friction clutch according to Claim 5,
**characterized in that**, over the engaging displacement at least between the beginning and a closing point (SP) corresponding to an initial contact of the pressure plate with at least one associated friction surface, in particular at least of one friction lining surface preferably of a clutch disc assembly, the sum, effective on the input side, of the reactive force and a counterforce, transmitted by the force-exerting arrangement (54g, 86g) and based on the action of the pneumatic spring device, increases in the engaging direction, preferably increasing slightly in the engaging direction in relation to the sum of the forces or in relation to the counterforce at the beginning of the engaging displacement.

7. Friction clutch according to Claim 6,
**characterized in that**, over an engaging displacement which is extended owing to friction lining wear at least between a position corresponding to the closing point (SP) in the state without friction lining wear and the closing point (SP') as a result of the friction lining wear, the sum, effective on the input side, of the reactive force and the counterforce, transmitted by the force-exerting arrangement (54g, 86g) and based on the action of the pneumatic spring device, increases in the engaging direction, preferably increasing slightly in the engaging direction in relation to the sum of the forces or in relation to the counterforce at the beginning of the engaging displacement.

8. Friction clutch according to Claim 7,
**characterized in that**, in relation to a state of maximum possible friction lining wear whilst still maintaining functional capability of the friction clutch, over the extended engaging displacement at least between a position corresponding to the closing point (SP) in the state without friction lining wear and the closing point (SP') as a result of the friction lining wear, the sum, effective on the input side, of the reactive force and the counterforce, transmitted by the force-exerting arrangement and based on the action of the pneumatic spring device, increases in the engaging direction, preferably increasing slightly in the engaging direction in relation to the sum of the forces at the beginning of the engaging displacement.

9. Friction clutch according to any one of Claims 6 to 8,
**characterized in that** the friction surface is implemented in an elastic resilient manner, possibly by providing a friction lining cushioning, and that, over the engaging displacement from the closing point (SP) in the engaging direction, the sum, effective on the input side, of the reactive force and the counterforce, transmitted by the force-exerting arrangement (54g, 86g) and based on the action of the pneumatic spring device, and a further counterforce, transmitted by the force-exerting arrangement and based on the elastic resilience of the friction surface, increases in the engaging direction, preferably increasing slightly in the engaging direction, in a section of the engaging displacement following on from the closing point, in relation to the sum of the forces at the beginning of the engaging displacement.

10. Friction clutch according to any one of Claims 1 to 9,
**characterized in that** the force-exerting arrangement is implemented as a weakened diaphragm spring or a lever ring device, preferably as a lever ring device (260A1; 260A2; 260A3; 260A4) connected as one piece on a periphery, which - if it can be allocated a stiffness value - is disposed at the beginning of the engaging displacement in the friction clutch substantially according to its stiffness value.

11. Friction clutch according to Claim 10,
**characterized in that** the diaphragm spring or lever ring device (260A1; 260A2; 260A3; 260A4) comprises an annular section implemented on an outer periphery preferably with weakening cut-outs or weakening slots (266A1; 266A3; 266A4) with flexible tongues or levers (262A1; 262A2; 262A3; 262A4) protruding inwardly from said annular section, wherein inner-lying flexible tongue ends or lever ends preferably form the input side.

12. Friction clutch according to Claim 10 or 11,
**characterized in that** the diaphragm spring or lever ring device (260A1; 260A2; 260A3; 260A4) comprises a stiffness angle of approximately 0 degrees or comprises no stiffness angle.

13. Friction clutch according to any one of Claims 1 to 12,
**characterized in that** the force-exerting arrangement, possibly a diaphragm spring or lever ring device or a prestressed spring device which prestresses the force-exerting arrangement, has an S-shaped spring characteristic curve, wherein a spring characteristic curve segment which increases in the engaging direction preferably at least in an approximately linear manner is associated with the engaging displacement, or that the force-exerting arrangement, possibly the diaphragm spring or lever ring device (260A1; 260A2; 260A3; 260A4), has a spring characteristic curve which increases at least in an approximately linear manner.

14. Friction clutch according to any one of Claims 1 to 13,
**characterized in that** the pneumatic spring device which is implemented as a soft spring device is installed in a highly prestressed state in the friction clutch, on the one hand to provide sufficient counterforce at the beginning of the engaging process and on the other hand to provide only a gentle increase of the counterforce during the engaging process.

15. Friction clutch according to any one of Claims 1 to 14,
**characterized in that** the pneumatic spring device comprises a spring rate which is less than or equal to approximately 125 N/mm, preferably less than or equal to approximately 100 N/mm.

16. Friction clutch according to any one of Claims 1 to 15,
**characterized in that** the pneumatic spring device comprises such a spring rate and the counterforce of the pneumatic spring device is transmitted by the force-exerting arrangement (54g, 86g) in such a way that a spring rate portion which is attributed to the pneumatic spring device and is less than or equal to approximately 30 N/mm, preferably less than or equal to approximately 25 N/mm, prevails at the input side of the force-exerting arrangement.

17. Friction clutch according to any one of Claims 1 to 16,
**characterized in that** the pneumatic spring device is prestressed in such a way that it provides at the beginning of an engaging process a counterforce of at least approximately 400 N, preferably of at least approximately 500 N.

18. Friction clutch according to any one of Claims 1 to 17,
**characterized in that** the pneumatic spring device is prestressed in such a way and the counterforce of the pneumatic spring device is transmitted by the force-exerting arrangement in such a way that a counterforce component which is attributed to the pneumatic spring device and is at least approximately 100 N, preferably at least approximately 125 N, prevails at the input side of the force-exerting arrangement (54g, 86g).

19. Friction clutch according to any one of Claims 1 to 18,
**characterized in that** the pneumatic spring device is implemented as a soft device and is prestressed in such a way that, over an engaging displacement from the closing point up to a point of maximum engagement, the counterforce of the pneumatic spring device increases by a force value which corresponds at a maximum to a third, preferably at a maximum to a quarter, most preferably at a maximum to a fifth of the counterforce which is provided by the pneumatic spring device at the beginning of an engaging process.

## Revendications

1. Embrayage à friction, comprenant un agencement de boîtier (16g), au moins un plateau de pression (38g, 72g) soumis à l'action d'un agencement de ressort de levage associé, lequel plateau de pression est accouplé à l'agencement de boîtier en vue d'une rotation conjointe autour d'un axe de rotation (A) et de manière déplaçable par rapport à l'agencement de boîtier dans la direction le long de l'axe de rotation (A), au moins un système d'embrayage (58g) pour produire une force d'embrayage, et au moins un agencement de sollicitation de force (54g, 86g) pour transférer la force d'embrayage au plateau de pression afin de déplacer celui-ci dans la direction d'embrayage à l'encontre de l'action de l'agencement de ressort de levage dans la direction le long de l'axe de rotation (A) ;
**caractérisé en ce que** l'agencement de ressort de levage est précontraint afin de fournir une force opposée agissant à l'encontre de la force d'embrayage agissant au début d'une opération d'embrayage, et
**en ce que** l'agencement de sollicitation de force (54g, 86g) est précontraint de manière opposée à la précontrainte de l'agencement de ressort de levage, de sorte qu'il ne fournisse lui-même aucune force de réaction opposée à la force d'embrayage au début d'une opération d'embrayage, d'un côté d'entrée de l'agencement de sollicitation de force associé au système de commande d'embrayage, par rapport à la force opposée transmise par l'agencement de sollicitation de force, sur la base de l'action de l'agencement de ressort de levage.

2. Embrayage à friction selon la revendication 1,
**caractérisé en ce que** le système de commande d'embrayage est réalisé avec un agencement de ressort de précontrainte, qui fournit une force opposée agissant à l'encontre d'une force d'actionnement d'un générateur de force du système de commande d'embrayage agissant au début d'une opération d'embrayage, la force d'embrayage étant la force résultant de la force d'actionnement et de la force opposée.

3. Embrayage à friction selon la revendication 1 ou 2,
**caractérisé par** un comportement force-distance généralement légèrement progressif, ou de préférence neutre, de la force de réaction de l'agencement de sollicitation de force (54g, 86g).

4. Embrayage à friction selon la revendication 3,
**caractérisé par** un comportement force-distance généralement neutre de la force opposée de l'agencement de ressort de levage.

5. Embrayage à friction selon l'une quelconque des revendications 1 à 4,
**caractérisé en ce que** la force de réaction agissant à l'encontre de la force d'embrayage augmente de manière continue depuis un minimum ou une valeur de force diminuant au début d'une course d'embrayage du plateau de pression le long de la course d'embrayage dans la direction d'embrayage, de préférence sur toute la course d'embrayage possible.

6. Embrayage à friction selon la revendication 5,
**caractérisé en ce que** sur la course d'embrayage, au moins entre le début et un point de fermeture (SP) correspondant à un début de contact du plateau de pression avec au moins une surface de friction associée, en particulier au moins une surface de garniture de friction de préférence d'un agencement de disque d'embrayage, la somme, agissant sur le côté d'entrée, de la force de réaction et d'une force opposée transmise par l'agencement de sollicitation de force (54g, 86g), augmente sur la base de l'action de l'agencement de ressort de levage dans la direction d'embrayage, de préférence de manière légèrement croissante dans la direction d'embrayage par rapport à la somme des forces ou à la force opposée au début de la course d'embrayage.

7. Embrayage à friction selon la revendication 6,
**caractérisé en ce que** sur une course d'embrayage prolongée en raison de l'usure des garnitures de friction, au moins entre une position correspondant au point de fermeture (SP) dans l'état sans usure des garnitures de friction et le point de fermeture (SP') suivant du fait de l'usure des garnitures de friction, la somme, agissant sur le côté d'entrée, de la force de réaction et de la force opposée transmise par l'agencement de sollicitation de force (54g, 86g), augmente dans la direction d'embrayage sur la base de l'action de l'agencement de ressort de levage, de préférence de manière légèrement croissante dans la direction d'embrayage par rapport à la somme des forces ou à la force opposée au début de la course d'embrayage.

8. Embrayage à friction selon la revendication 7,
**caractérisé en ce que**, par rapport à un état d'usure maximum possible des garnitures de friction alors que l'embrayage à friction est encore fonctionnel, sur la course d'embrayage prolongée au moins entre une position correspondant au point de fermeture (SP) dans l'état sans usure des garnitures de friction et le point de fermeture (SP') suivant du fait de l'usure des garnitures de friction, la somme, agissant sur le côté d'entrée, de la force de réaction et de la force opposée transmise par l'agencement de sollicitation de force, sur la base de l'action de l'agencement de ressort de levage, augmente dans la direction d'embrayage, de préférence de manière légèrement croissante dans la direction d'embrayage par rapport à la somme des forces au début de la course d'embrayage.

9. Embrayage à friction selon l'une quelconque des revendications 6 à 8,
**caractérisé en ce que** la surface de friction est réalisée de manière élastiquement flexible, éventuellement en prévoyant une suspension des garnitures de friction, et **en ce que** sur la course d'embrayage à partir du point de fermeture (SP) dans la direction d'embrayage, la somme, agissant sur le côté d'entrée, de la force de réaction et de la force opposée transmise par l'agencement de sollicitation de force (54g, 86g) sur la base de l'action de l'agencement de ressort de levage et d'une force supplémentaire opposée transmise par l'agencement de sollicitation de force sur la base de la flexibilité élastique de la surface de friction augmente dans la direction d'embrayage, de préférence de manière légèrement croissante dans la direction d'embrayage dans une portion de course d'embrayage suivant le point de fermeture, par rapport à la somme des forces au début de la course d'embrayage.

10. Embrayage à friction selon l'une quelconque des revendications 1 à 9,
**caractérisé en ce que** l'agencement de sollicitation de force est réalisé sous la forme d'un ressort à membrane affaibli ou sous la forme d'un agencement annulaire de levier, de préférence sous la forme d'un agencement annulaire de levier (260A1 ; 260A2 ; 260A3 ; 260A4) rattaché d'une seule pièce au niveau d'une périphérie, lequel agencement annulaire de levier, lorsque l'on peut lui associer une position de dureté, est disposé au début de la course d'embrayage dans l'embrayage à friction de manière correspondant sensiblement à sa position de dureté.

11. Embrayage à friction selon la revendication 10,
**caractérisé en ce que** le ressort à membrane ou l'agencement annulaire de levier (260A1 ; 260A2 ; 260A3 ; 260A4) présente une portion annulaire réalisée sur une périphérie extérieure de préférence avec des évidements d'affaiblissement ou des fentes d'affaiblissement (266A1 ; 266A3 ; 266A4) et des langues élastiques ou des leviers (262A1 ; 262A2 ; 262A3 ; 262A4) saillant vers l'intérieur depuis cette portion annulaire, des extrémités des langues élastiques ou des leviers situées vers l'intérieur formant de préférence le côté d'entrée.

12. Embrayage à friction selon la revendication 10 ou 11,
**caractérisé en ce que** le ressort à membrane ou l'agencement annulaire de levier (260A1 ; 260A2 ; 260A3 ; 260A4) présente un angle de dureté d'environ 0 degré, ou ne présente pas d'angle de dureté.

13. Embrayage à friction selon l'une quelconque des revendications 1 à 12,
**caractérisé en ce que** l'agencement de sollicitation de force, éventuellement le ressort à membrane ou l'agencement annulaire de levier, ou un agencement de ressort de précontrainte précontraignant l'agencement de sollicitation de force, satisfait à une courbe caractéristique de ressort de forme sinusoïdale, la course d'embrayage étant associée à une portion de courbe caractéristique de ressort augmentant de préférence au moins approximativement linéairement dans la direction d'embrayage, ou **en ce que** l'agencement de sollicitation de force, éventuellement le ressort à membrane ou l'agencement annulaire de levier (260A1 ; 260A2 ; 260A3 ; 260A4), satisfait à une courbe caractéristique de ressort augmentant au moins approximativement linéairement.

14. Embrayage à friction selon l'une quelconque des revendications 1 à 13,
**caractérisé en ce que** l'agencement de ressort de levage réalisé sous forme d'agencement de ressort faible est installé de manière largement précontrainte dans l'embrayage à friction, afin de fournir d'une part au début d'un embrayage une force opposée suffisante, et d'autre part d'assurer seulement une augmentation douce de la force opposée lors de l'embrayage.

15. Embrayage à friction selon l'une quelconque des revendications 1 à 14,
**caractérisé en ce que** l'agencement de ressort de levage présente une valeur de raideur inférieure ou égale à environ 125 N/mm, de préférence inférieure ou égale à environ 100 N/mm.

16. Embrayage à friction selon l'une quelconque des revendications 1 à 15,
**caractérisé en ce que** l'agencement de ressort de levage présente une valeur de raideur telle, et la force opposée de l'agencement de ressort de levage est transmise par l'agencement de sollicitation de force (54g, 86g) de telle sorte, que du côté de l'entrée de l'agencement de sollicitation de force, une proportion de la valeur de raideur à attribuer à l'agencement de ressort de levage soit inférieure ou égale à environ 30 N/mm, de préférence inférieure ou égale à environ 25 N/mm.

17. Embrayage à friction selon l'une quelconque des revendications 1 à 16,
**caractérisé en ce que** l'agencement de ressort de levage est précontraint de telle sorte qu'il fournisse au début d'une opération d'embrayage une force opposée d'au moins environ 400 N, de préférence d'au moins environ 500 N.

18. Embrayage à friction selon l'une quelconque des revendications 1 à 17,
**caractérisé en ce que** l'agencement de ressort de levage est précontraint de telle sorte et la force opposée de l'agencement de ressort de levage est transmise par l'agencement de sollicitation de force de telle sorte qu'une composante de force opposée à attribuer à l'agencement de ressort de levage d'au moins environ 100 N, de préférence d'au moins environ 125 N, s'applique au niveau du côté d'entrée de l'agencement de sollicitation de force (54g, 86g).

19. Embrayage à friction selon l'une quelconque des revendications 1 à 18,
**caractérisé en ce que** l'agencement de ressort de levage est réalisé sous forme flexible et est précontraint de telle sorte que la force opposée de l'agencement de ressort de levage, sur une course d'embrayage depuis le point de fermeture jusqu'à un point d'embrayage maximum, augmente d'une valeur de force qui correspond au maximum à un tiers, de préférence au maximum à un quart, le plus préférablement au maximum à un cinquième de la force opposée fournie au début d'une opération d'embrayage par l'agencement de ressort de levage.
